# EUROPEAN PATENT SPECIFICATION

(11) **EP 4 052 448 B1**
(45) Date of publication and mention of the grant of the patent: **11.10.2023**
(21) Application number: 20703292.1
(22) Date of filing: 24.01.2020
(51) Int. Cl.: H04L 69/326, H04L 69/164, H04L 67/561, H04L 67/14

(54) **ENHANCEMENT FUNCTION DISCOVERY VIA WIRELESS NETWORK ASSISTANCE FRAMEWORK**
VERBESSERUNGSFUNKTIONSENTDECKUNG ÜBER EINEN DRAHTLOSEN NETZWERKHILFSRAHMEN
DÉCOUVERTE DE FONCTION D'AMÉLIORATION PAR L'INTERMÉDIAIRE D'UN CADRE D'ASSISTANCE DE RÉSEAU SANS FIL

(30) Priority: 01.11.2019 US 201962929557 P
(43) Date of publication of application: 07.09.2022
(73) Proprietor: Telefonaktiebolaget LM Ericsson (publ), 164 83 Stockholm (SE)
(72) Inventor: SARKER, Zaheduzzaman, 176 50 Järfälla (SE); MUÑOZ DE LA TORRE ALONSO, Miguel Angel, 28002 Madrid (ES); SANCHEZ VEGA, Veronica, 28027 Madrid (ES); IHLAR, Marcus, 125 74 Älvsjö (SE); FERLIN, Simone, 16872 Stockholm (SE); KUEHLEWIND, Mirja, 71634 Ludwigsburg (DE)
(74) Representative: Ericsson
(86) International application number: PCT/IB2020/050582
(87) International publication number: WO 2021/084326

(56) References cited:
- WO-A1-2019/166108
- US-A1- 2018 063 853
- SCHINAZI GOOGLE LLC D: "The MASQUE Protocol; draft-schinazi-masque-01.txt", THE MASQUE PROTOCOL; DRAFT-SCHINAZI-MASQUE-01.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4, RUE DES FALAISES CH- 1 , no. 1 9 July 2019 (2019-07-09), pages 1-13, XP015134317, Retrieved from the Internet: URL:https://tools.ietf.org/html/draft-schi nazi-masque-01 [retrieved on 2019-07-09]

## Description

### TECHNICAL FIELD

The present application relates generally to enhancement function discovery and, more particularly, to proposing methods and apparatus for the enhancement function discovery via a wireless network assistance framework.

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Today's networks do more than just forwarding traffic. It is a common practice for a network operator to capture traffic traversing its network for monitoring, inspection, and/or classification, so that necessary measures can be taken to ensure good network health and/or user experience. When unencrypted application and/or transport protocols (such as Hypertext Transfer Protocol (HTTP), partially HTTP Secure (HTTPS), or Transmission Control Protocol (TCP)) are used, a network operator (also referred to as network provider) usually does not require close collaboration with an Over-The-Top (OTT) service, application, and/or content provider (collectively referred to as service provider in this disclosure) that offers services, applications, and contents through a network maintained/operated by the network operator. However, as service providers are deploying encrypted protocols (such as HTTP Version 3 (HTTP/3) or QUIC) at a fast pace, it is becoming more difficult for operators to use traffic for network monitoring or application optimization purposes in a non-collaborative way. To use network functions that optimize traffic or provide differential treatment when traffic is encrypted, the network operator and the service provider need to collaborate. Through this kind of collaboration, network operators and service providers can discover and/or negotiate the existence of a proxy (e.g., a QUIC proxy) or a QUIC performance enhancement function, which can be configured.

3GPP (the third Generation Partnership Project) provides an exposure framework. Yet the exposure framework has not been utilized to support performance enhancement functionality to be implemented in-band and/or on the path of application delivery.

WO 2019/166108A1 describes a method of determining passive round trip time delay in a telecommunications system. The document by D. Schinazi, Google LLC, dated July 08, 2019 entitled: "The MASQUE Protocol"; Internet-draft: Network working group, Internet Engineering task force, IETF; standardworkingdraft, internet society (ISOC) 4, rue des falaises CH- 1, no.1, relates to multiplexed application substrate over QUIC encryption. US2018063853 relates to resource allocation.

### BRIEF DESCRIPTION OF THE DRAWINGS

**Figure 1** shows the 5G reference architecture as defined by 3GPP (the third Generation Partnership Project).
**Figure 2** shows a placement of proxy node in a wireless network per one embodiment of the disclosure.
**Figure 3** further shows the network entities for network assistance using enhancement functions in a wireless network per one embodiment of the disclosure.
**Figure 4** shows an architecture framework for implementing network assistance functionalities to enhance performance of a QUIC session in a wireless network.
**Figure 5** shows network assistance using an enhancement function per one embodiment of the disclosure.
**Figures 6A-B** show a more detailed view of the operations involved in performing network assistance per one embodiment of the disclosure.
**Figure 7** is a flow diagram showing the operations at a network node for using the network assistance for traffic enhancement per some embodiments.
**Figure 8** is a flow diagram showing the operations at a wireless device for using the network assistance for traffic enhancement per some embodiments.
**Figure 9** shows a network node per one embodiment.
**Figure 10** shows a wireless network per some embodiments.
**Figure 11** shows a user equipment (UE) per some embodiments.
**Figure 12** is a schematic block diagram illustrating a virtualization environment in which functions implemented by some embodiments may be virtualized.
**Figure 13** is a telecommunication network connected via an intermediate network to a host computer per some embodiments.
**Figure 14** shows a host computer communicating via a base station with a user equipment over a partially wireless connection per some embodiments.
**Figure 15** is a flow diagram showing the operations implemented in a communication system including a host computer, a base station, and a user equipment per some embodiments.
**Figure 16** is a flow diagram showing the operations implemented in a communication system including a host computer, a base station, and a user equipment per other embodiments.
**Figure 17** is a flow diagram showing the operations implemented in a communication system including a host computer, a base station, and a user equipment per further embodiments.
**Figure 18** is a flow diagram showing the operations implemented in a communication system including a host computer, a base station, and a user equipment per further embodiments.
**Figure 19** is a schematic block diagram showing an apparatus in a wireless network per some embodiments.

### SUMMARY

Embodiments of the disclosure include methods implemented in a network node for traffic enhancement to apply to an application between a wireless device and a server, where the application is to be delivered using a QUIC session. In one embodiment, a method includes receiving from the wireless device, a request to activate a policy for the application between the wireless device and the server, where the request includes an identifier of the application and an indication to request an enhancement function. The method further includes, in response to the request to activate the policy for the application, transmitting to the wireless device, an authorization of traffic enhancement with information of a proxy node to provide the enhancement function upon the network node identifying the proxy node.

Embodiments of the disclosure include network nodes for applying traffic enhancement to an application between a wireless device and a server, where the application is to be delivered using a QUIC session. In one embodiment, a network device comprises a processor and non-transitory machine-readable storage medium having stored instructions, which when executed by the processor, is capable of causing the network node to perform receiving from the wireless device, a request to activate a policy for the application between the wireless device and the server, where the request includes an identifier of the application and an indication to request an enhancement function. The network node is caused to further perform in response to the request to activate the policy for the application, transmitting to the wireless device, an authorization of traffic enhancement with information of a proxy node to provide the enhancement function upon the network node identifying the proxy node.

Embodiments of the disclosure include non-transitory computer-readable storage media having stored instructions for traffic enhancement to apply to an application between a wireless device and a server, where the application is to be delivered using a QUIC session. In one embodiment, a non-transitory computer-readable storage medium having stored instructions, where the instructions when executed by the processor of a network node, are capable of causing the network node to perform receiving from the wireless device, a request to activate a policy for the application between the wireless device and the server, where the request includes an identifier of the application and an indication to request an enhancement function. The network node is caused to further perform in response to the request to activate the policy for the application, transmitting to the wireless device, an authorization of traffic enhancement with information of a proxy node to provide the enhancement function upon the network node identifying the proxy node.

Embodiments of the disclosure provide mechanisms to utilize the exposure framework and support the discovery and usage of performance enhancement functionality, thus allow a network operator and a service provider to collaborate and provide performance enhancement or charging enhancement in a wireless network. For example, the solutions proposed in this disclosure may reuse and/or extend the 5G Network Assistance application programming interfaces (APIs) to discover, configure, and use (1) performance enhancement functionality such as traffic prioritization to improve the end users' Quality of Experience (QoE) and/or (2) charging functionality such as sponsored data provided by service, application, and/or content providers. The enhancement functionality may be implemented in an on-path COllaborative Performance Enhancement (COPE) entity (also referred to as a COPE proxy) or another proxy (e.g., another QUIC proxy). For simplicity of discussion, COPE entity is used as an example of the proxy for traffic enhancement in some embodiments of the disclosure, but other proxies may be implemented in place of the COPE entity in these and other embodiments of the disclosure as well. Similarly, while QUIC session is used as an example of an encrypted transport protocol that supports the enhancement functionality through a proxy, other encrypted transport protocols may be implemented in place of the QUIC protocol in these and other embodiments of the disclosure as well.

A service provider may use the abstract Network Assistance APIs to discover a COPE entity and its functionalities, provided by the network's operator or by a third-party network, for a certain type of network support function. Further, they can use the same abstract API to explicitly configure the use of COPE for certain traffic flows, where the application, after discovering COPE entity, sends all of the application's traffic via COPE entity; thus, the network does not need to interfere in the application traffic. In the scope of this disclosure, one or more applications may run atop of QUIC and it is, therefore, encrypted. Note that there is no restriction in terms of capabilities offered by COPE to any application.

Certain embodiments may provide one or more of the following technical advantages. For example, the proposed solution allows the discovery and configuration of an enhancement function (e.g., by using COPE entity), to request network support for a particular (encrypted) application traffic. The Network Assistance framework can be hosted by both 3GPP and third-party networks. Use of the Network Assistance interface for COPE discovery and configuration enables faster deployment and simple usage of policy enforcement for traffic between a wireless device and a service provider via COPE. The discovery and configuration of the enhancement function allows the wireless device to request/receive a QoE or sponsored data that is suitable to the particular application traffic over a QUIC connection.

### DETAILED EXPLANATION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Additional information may also be found in the document(s) provided in the Appendix.

### OUIC

QUIC is a general-purpose transport layer network protocol. While it may be referred to as the acronym for Quick User Datagram Protocol (UDP) Internet Connections, some organizations (e.g., Internet Engineering Task Force (IETF)) refer to QUIC as the name of the protocol without treating it as an acronym. QUIC may be viewed as similar to Transmission Control Protocol (TCP) + enhancement such as Transport Layer Security (TLS) and/or Hypertext Transfer Protocol 2.0 (HTTP/2 or HTTP/2.0) but implemented on top of UDP. QUIC is therefore a UDP based stream-multiplexed and secure transport protocol with integrity protected header and encrypted payload. Yet unlike the traditional transport protocol stack with TCP (Transmission Control Protocol), which resides in the operating system kernel, QUIC can easily be implemented in the application layer. Consequently, this improves flexibility in terms of transport protocol evolution with implementation of new features, congestion control, deployability, and adoption. QUIC uses TLS for security handshake by default. TLS exchanges the necessary keying material in the protocol's handshake. The use of TLS (defined in IETF Request for Comments (RFC) 8446) or Datagram TLS (DTLS) (under discussion, see IETF Internet-Draft draft-ietf-tls-dtls13-31 dated March 25, 2019) is very common as a transport security solution independent from the underlying transport protocol being TCP or UDP. Note that HTTP-over-QUIC is sometimes referred to as HTTP/3 as approved by IETF.

While QUIC standardization efforts started less than 7 years ago, presently it represents nearly 10% of the Internet traffic pushed by large Internet domains. QUIC is becoming a main transport protocol in the Internet's user plane. Many applications running today over HTTP/HTTPS may migrate to QUIC, driven by QUIC's latency improvements and stronger security. Notably, encryption in QUIC covers both the transport protocol headers as well as the payload, as opposed to TLS over TCP (e.g., HTTPS), which protects only the payload.

### Proxy

A proxy is an intermediary program/software (or hardware such as a network node implementing such intermediary program/software) acting as a server, a client, or a combination of the server or client for some functionalities as the proxy may create or simply relay requests on behalf of other entities. The proxy may be implemented on a path between a server and a client. Note that each of the client, server, and proxy may be implemented in one or more network nodes such as client nodes, server nodes, and intermediate (on-path) nodes, respectively. Each of a server or client node may be referred to as an endpoint node.

Requests are serviced internally or by passing them on, with possible translation, to other servers. There are several types of proxies, including the following: (1) A "transparent proxy" is a proxy that does not modify the request or response beyond what is required for proxy authentication and identification; (2) a "non-transparent proxy" is a proxy that modifies the request or response to provide some added service to the user agent, such as group annotation services, media type transformation, protocol reduction, or anonymity filtering; (3) a "reverse proxy" basically is a proxy that pretends to be the actual server (as far as any client or client proxy is concerned), but it passes on the request to the actual server that is usually sitting behind another layer of firewalls; and (4) a "performance enhancement proxy" (PEP) is used to improve the performance of protocols on network paths (e.g., where native performance suffers due to characteristics of a link or subnetwork on the path).

### 5G Reference Architecture

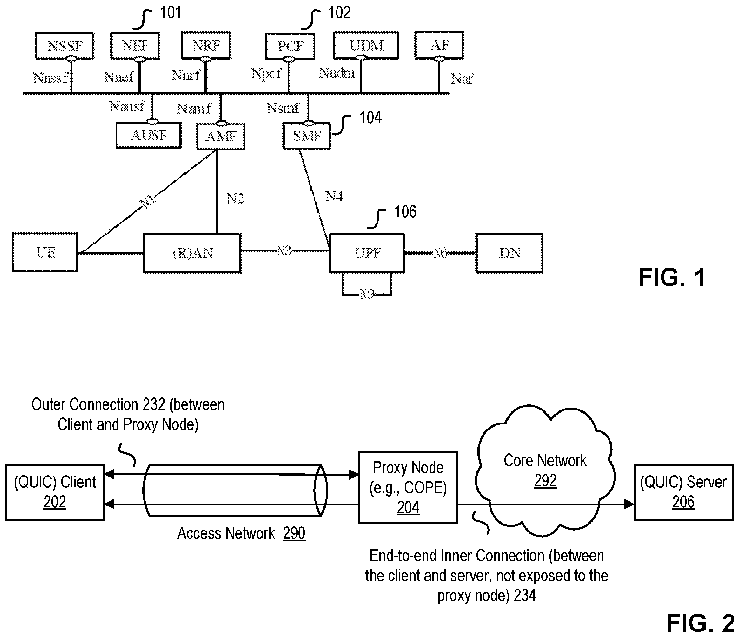

Figure 1 shows the 5G reference architecture as defined by 3GPP (the third Generation Partnership Project). Some of the relevant architectural aspects for embodiments of the disclosure include the following blocks: network exposure function (NEF) 101, policy control function (PCF) 102, session management function (SMF) 104, and user plane function (UPF) 106.

### NEF (Network Exposure Function)

The Network Exposure Function (NEF) 101 supports different functionality and specifically in the context of this Disclosure, NEF acts as the entry point into an operator's network, so an external Application Function (AF) interacts with the 3GPP Core Network through NEF.

### PCF (Policy Control Function)

The Policy Control Function (PCF) 102 supports a unified policy framework to govern the network behavior. Specifically, for this disclosure, the PCF provides Policy and Charging Control (PCC) rules to the Policy and Charging Enforcement Function (PCEF), i.e., the SMF/UPF that enforces policy and charging decisions according to provisioned PCC rules.

### SMF (Session Management Function)

The Session Management Function (SMF) 104 supports different functionalities; specifically, for this disclosure, SMF receives PCC rules from the PCF and configures the UPF accordingly.

### UPF (User Plane Function)

The User Plane Function (UPF) 106 supports handling of user plane traffic based on the rules received from the SMF; specifically, for this disclosure, packet inspection and different enforcement actions such as traffic steering, Quality of Service (QoS), charging, etc.

### Over-The-Top (OTT) Services

OTT services are provided by a service provider across one or multiple IP networks, for example, the Internet. The service provider here is solely responsible for content controlling and distribution and they usually do it by bypassing telecommunication, Internet Service Providers (ISPs), or broadcast channels, and treating the Internet as a black box. Even though the basic principle of operation is "best-effort," both service and network providers deploy many techniques to guarantee QoS requirements. These include Content Delivery Network (CDN), caching, proxying, load balancing, transport protocol optimization for cellular and satellite networks, and other traffic engineering.

3GPP supports an exposure framework between a network operator and a service provider, and the exposure framework is based on control plane signaling (which is an out-of-band channel separate from the user's data traffic). This framework allows the service provider to cooperate with the network operator on, for example, policy enforcement and quality assurance. Yet this architecture is not widely used from the beginning of the deployment of an OTT service because it requires particular Service Level Agreements (SLAs) to be in place between multiple, if not all, parties involved. Moreover, this is costly and rather difficult to achieve.

### COllaborative Performance Enhancement (COPE) Node and/or Function

A COllaborative Performance Enhancement (COPE) node or function (the COPE node/function may also be referred to as a COPE entity) may be implemented in a network device containing a QUIC proxy and/or performance/traffic enhancement features/functions, and the COPE node may be an intermediate/on-path node (referred to as a COPE node for it implementing the COPE functions) between two endpoints, usually in a client and server setup but also in a peer to peer communication setup, that use encrypted communication.

One communicating party (e.g., a client) may explicitly contact an on-path COPE entity in order to request a network-support service. This service, at a minimum, always includes forwarding of the encrypted traffic to a specific server (e.g., when the server is otherwise not directly reachable). In addition, the endpoints can share traffic information with the COPE entity such that the COPE entity can execute a requested enhancement function to improve the QoS of the traffic as well as optimize operations within the network. Alternatively, the COPE entity may provide additional information about the network that enables the endpoint to optimize its data transfer, e.g., use a more optimized congestion control or delay pre-fetching activities.

**Figure 2** shows a placement of proxy node in a wireless network per one embodiment of the disclosure. A client 202 (e.g., a QUIC client) may learn about the existence of the proxy node 204 either directly from an access network 290 or by another communication with a peer. The proxy node may provide one or more enhancement functions between the client 202 and server 206. In one embodiment, the proxy node implements a COPE entity. When the proxy node 204 is detected, the client 202 may open a connection to it. For example, when QUIC is used as a transport protocol, a QUIC connection is opened to request a service. The QUIC connection between the client 202 and proxy node 204 uses an outer connection 232 and can exchange information through a stream of that outer QUIC connection. The communication with a server 206 (e.g., a QUIC server) is realized by an inner transport connection 234 that is encrypted end-to-end between the client 202 and the server 206 through a core network 292. The inner transport connection is sent within one stream of the outer QUIC connection. In some embodiments, the proxy that provides the enhancement functions may be implemented between two peer nodes as well. The enhancement functions may assist the client 202 in its session with the server 206.

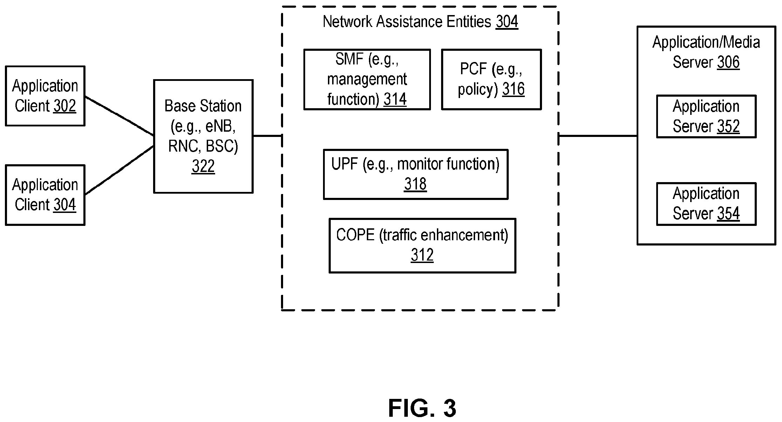

**Figure 3** further shows the network entities for network assistance using enhancement functions in a wireless network per one embodiment of the disclosure. In a wireless network, the application clients 302 and 304 communicate with application and/or media server 306 through a set of network entities. Each of the application servers 352 and 354 may provide one or more services to the application clients 302 and 304. The applicant clients 302 and 304 access the wireless network through an access network, which includes a base station 322 (e.g., eNodeB). The base station 322 may include a radio network controller (RNC), a base station controller (BSC), and/or other entities.

The network assistance may be performed by a number of entities within a core network of the wireless network. For example, the SMF 314 may provide management functions for sessions between the applicant clients 302/304 and the application servers 352/354. The PCF 316 may provide functions about policy and charging control rules for the sessions, and the UPF 318 may monitor the user plane traffic based on the rules received from SMF 314. The COPE entity 312 may provide enhancement functions for the sessions.

### Application Network Interaction

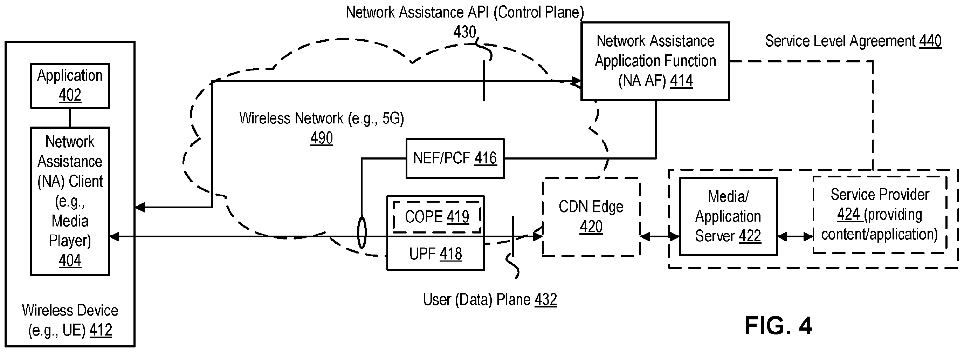

**Figure 4** shows an architecture framework for implementing network assistance functionalities to enhance performance of a QUIC session in a wireless network. The architecture includes one or more application programming interfaces (APIs) (not shown) between an application 402 implemented within a wireless device 412 (e.g., a UE) and a network assistance client 404. Note that the application 402 is an application client of an application server of the media/application server, thus it is a wireless device application (e.g., UE application) in contrast to the application between the wireless device and the media/application server, and it may be referred to as an application client of an application server in some embodiments. The APIs are exposed by the network assistance client 404 to the application 402 so that the application 402 may use one or more enhancement functions offered by the exposure network.

The network assistance client 404 is the client (e.g., client 202) for a QUIC session. In one embodiment, the network assistance client 404 may be a UE 5G Media Function such as a media player. The media player has APIs such as UE Media Session Handling APIs (referred to as M6d in 3GPP TS 26.501) and/or UE Media Player APIs (referred to as M7d in 3GPP TS 26.501) for the application 402 to use to deploy enhancement functions. A UE may include multiple network assistance clients and each network assistance client may offer a service to a different UE application (e.g., Netflix application, YouTube application, etc.), so that the network assistance client may request a policy to be applied by the wireless network on the particular application traffic. The policy may be QoS related (e.g., traffic delay, congestion, packet loss) regarding Quality of Experience (QoE) of a user. Additionally, the policy may be charging related regarding sponsored data for the particular application traffic. For example, the UE application may request a sponsorship for the particular UE or a (registered) user of the UE so that the traffic of the UE application is not charged or charged at a discounted rate.

The network assistance client 404 communicates with the network through one or more signalling interfaces (e.g., a Network Assistance API 430) towards a Network Assistance Application Function (NA AF) 414. In one embodiment, the NA AF 414 is a media Application Function (AF). The signalling interfaces allow the network assistance client 404 to interact with the network and influence or enforce a certain delivery policy (e.g., a media delivery policy for a media client implemented as the network assistance client 404). With this architecture, a client interacting with a wireless network 490 (e.g., a 5G core (5GC) network) can request policies for handling user plane traffic. The NA AF 414 can reside as an application function in the UPF 418, allowing it to communicate with a PCF via a SMF (not shown); or it could be a third-party entity hosted by and interacting with the PCF via a NEF as shown at reference 416. An enhancement function may be implemented in a COPE entity 419, which can also reside as an application function in the UPF 418.

This architecture introduces common network assistance APIs, which can then be used to provide network assistance for the traffic between the wireless device 412 and a media/application server 422. Note that the architecture framework may be used for media, other applications, and/or UPF traffic to benefit from network assistance for enhanced quality of experience (QoE).

Embodiments of the disclosure include an extension to a network assistance API 430 (e.g., a 5G network assistance API) by adding enhancement information (e.g., COPE information) in the policy activation response from the NA AF 414 towards the UE application. Note that as an assumption for the usage of network assistance, a service provider (e.g., the service provider 424 that provides content and/application through its media/application server 422) has a Service-Level Agreement (SLA) 440 in place with a network operator (e.g., the operator of the wireless network 490 or core network 292). The service provider can then install policies for the application traffic of interest through the network assistance API 430 to explicitly leverage enhancement capabilities provided by the network operator. The application traffic is then transported through user (data) plane 432, which may reach the media/application server 422 through a content delivery network (CDN) edge 420. Note that the network proxy that performs the enhancement function (e.g., a COPE entity) may be a logical function located either inside or outside the UPF 418 as well as a network node that is physically coupled to the UPF 418.

When a network assistance client 404 starts the session towards the server 422, it sends a request to activate the policy towards the NA AF 414. The NA AF 414 authorizes the policy usage for the particular application, indicating that it wants to explicitly use the COPE function and the required COPE capabilities. In the response to the policy activation request, the NA AF 414 sends the COPE information that it wants the application to use. The application 402 then starts the communication with COPE to establish a multi-layer security context with QUIC towards the server 422.

In one embodiment, the required information for COPE to be able to be explicitly addressed includes one or more of the following: (1) Global ID or a Common Name (CNAME), (2) COPE certificate (Cert), and/or (3) Optional IP address and/or port. The COPE information and, in some embodiments, a validity time may be conveyed to the application 402 in the policy activation response from the NA AF 414 towards the wireless device 412. The validity time is a timer that indicates how long the COPE instance is available for the session and is sometimes referred to as lifetime.

In the same policy activation response, or in the subsequent communication between the wireless device 412 and the NA AF 414, the usage policy will be communicated so that the application reveals the information required for the COPE 419 to perform the desired function.

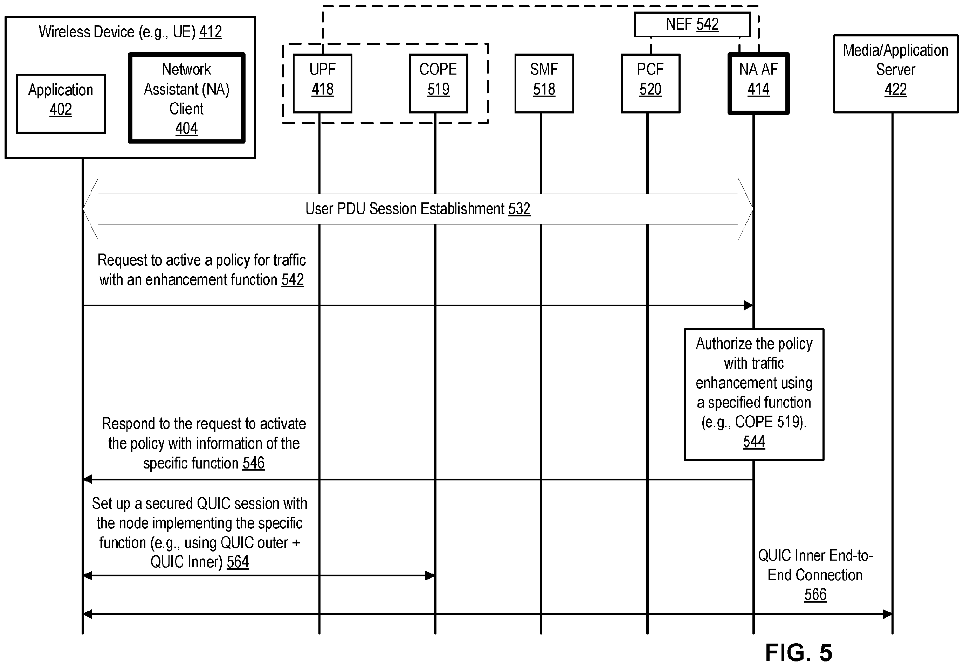

**Figure 5** shows network assistance using an enhancement function per one embodiment of the disclosure. At reference 532, a protocol data unit (PDU) session is established between the wireless device 412 and the wireless network (e.g., the wireless network 490). The PDU session may be established between the wireless device 412 and the NA AF 414.

The PDU session creates a bearer between the wireless device 412 to the wireless network. The PDU session does not reach the media/application server 422, thus the PDU session by itself is insufficient to deliver traffic between the wireless device 412 and the media/application server 422. The PDU session may not have a service level agreement (SLA) specified for the QoS of the session. Thus, the PDU session may use a default SLA and/or QoS.

The wireless device 412 then starts an application using QUIC as the transport protocol. At reference 542, the wireless device 412 sends a request to activate a policy for its traffic. The activation request includes (1) an application identifier to indicate the type of traffic to be delivered to the wireless device and (2) an indication to request an enhancement function (e.g., a parameter of COPE required that is set to YES). While in some embodiments, the activation request indicates only that an enhancement function is requested, other embodiments further specify one or more particular enhancement functions for which the application requires.

The activation request may also indicate that QUIC is the transport protocol. In one embodiment, the indication to request an enhancement function may be an indication to request a proxy (or a proxy node) that performs the enhancement function. The enhancement function/proxy may be determined based on a subscriber policy profile of the wireless device or the user of the wireless device, and the subscriber policy profile may be saved in a unified data repository (UDR), through which the subscriber policy profile may be updated so that a different enhancement function/proxy may be used by the application.

The activation request is received at the NA AF 414, which authorizes the policy with traffic enhancement using a specific function (e.g., implemented using a proxy node such as a COPE node 519) at reference 544. The NA AF 414 may also reject the policy activation request (e.g., when it determines that the requested enhancement function cannot be performed for the indicated type of traffic). When that happens, the NA AF 414 may trigger a policy activation response message indicating an error, so that no enhancement function is assigned to the application.

For the NA AF 414 to authorize the policy, the NA AF 414 may interact with one or more of a PCF 520, a SMF 518, and the UPF 418. For example, the NA AF 414 may notify the PCF 520 about the activation request from the wireless device 412, and the PCF 520 may create/update its PCC rules and send a request message to the SMF 518. The SMF 518 may then request the UPF 418 to forward the application traffic to the proxy node implementing the specific function that satisfies the requested enhancement function for the type of traffic indicated by the activation request.

The UPF 418 may select, from multiple enhancement functions that are implemented on the path between the wireless device 412 and the media/application server 422 and each of which performs one or more enhancement functions, the specific function that satisfies the requested enhancement function for the type of traffic indicated by the activation request.

The UPF 418 then returns information about the proxy node implementing the specific function to the SMF 518, including one or more of the following: (1) Global ID or a Common Name (CNAME), (2) COPE certificate (Cert), (3) Optional IP address and/or port, and/or (4) validity time. The SMF 518 then passes along the information about the specific function to the PCF 520, which in turn notifies the NA AF 414.

At reference 546, the NA AF 414 responds to the request to activate the policy with the information about the node implementing the specific function (e.g., the COPE entity 519). Once the wireless device 412 obtains the information about the node, the wireless device 412 sets up a secured QUIC session with the node implementing the specific function (e.g., a COPE instance) at reference 564. For example, the QUIC session may use packets with a QUIC outer connection for communication with the node. The packets may have (1) the QUIC outer connection for communicating between the wireless device 412 and the node and (2) a QUIC inner connection for communicating between the wireless device 412 and the media/application server 422.

The specific enhancement on traffic between the wireless device 412 and the media/application server 422 allows the traffic to comply with a required SLA between the network operator of the wireless network and the service provider that maintains the media/application server 422. The user traffic can then be transmitted through a QUIC inner end-to-end connection using the inner end-to-end connection at reference 566.

Note that a COPE node may perform a set of functions, including one or more of the following:
(1) congestion control enhancement function/feature;
(2) a split or domain specific congestion control function/feature (provided information: notification from the COPE node to the client to acknowledge incoming data from the server, or direct acknowledgements of incoming data from the COPE node to the server);
(3) a traffic exposure function/feature (requested information: statistics, reports with destinations). Traffic exposure may include Quality of Experience (QoE) metrics supplied from a client to the network (e.g., collected by a COPE node) or information exposed from the network to the application such as subscriber quota status, policy requirements, etc. The statistics and reports include, for example, a video client supplying Media Object Server (MOS) data to the network via COPE; and the COPE node supplying network level statistics to an application, e.g., type of access network, throughput experienced by a user equipment (UE) over a period (e.g., last number of seconds);
(4) a link to a more detailed set of function/feature list (e.g., a HTTPS link); and
(5) sponsored data (charging related, allowing application traffic to traverse a wireless network without charge).

The client and COPE node will agree on the feature usage. The encryption of the COPE information may use the existing encryption algorithms known in the art. For example, the encryption can use so-called hybrid encryption algorithm (e.g., Elliptic Curve Integrated Encryption Scheme (ECIES)) consisting of a key encapsulation mechanism and a data encapsulation mechanism) or other symmetric/asymmetric encryption algorithms.

### An Exemplary Embodiment

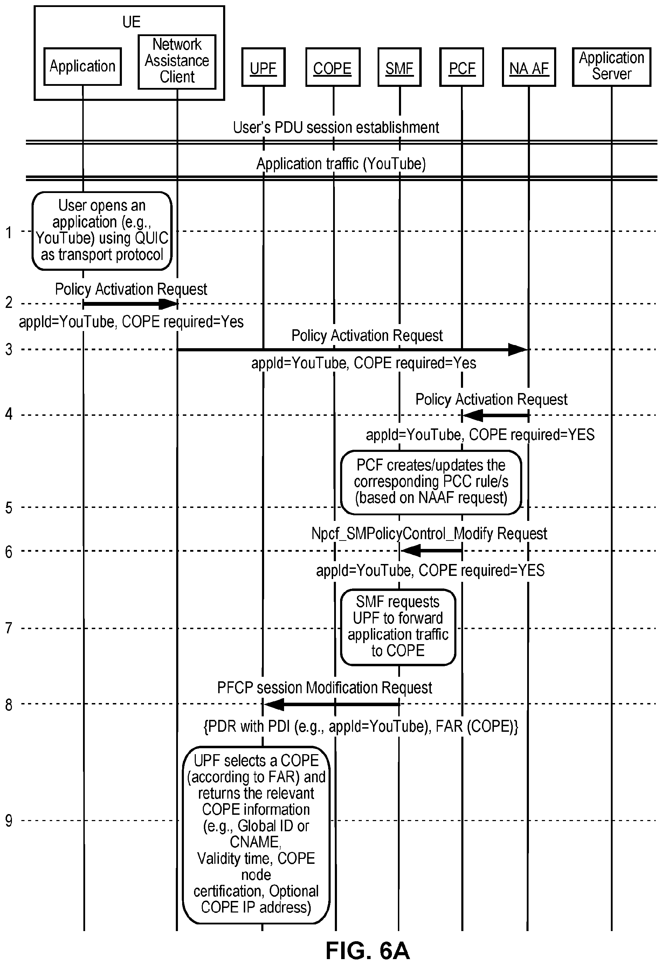

**Figures 6A-B** show a more detailed view of the operations involved in performing network assistance per one embodiment of the disclosure. The exemplary application is an application required by a UE, and it is YouTube (of course, other applications such as other uniform resource identifiers (URIs), uniform resource locators (URLs), and mobile apps may be used in embodiments of the disclosure as well). The application requests a proxy service from the network, depicted as COPE. Steps are detailed below:

Preconditions: The UE's PDU session is already established. The UE's PDU session, as discussed earlier, does not reach the application server. Also, this solution assumes a default policy to handle applications (e.g., YouTube), which could be based on an existing SLA between the network operator and the content provider.

Step 1) The UE opens an application (e.g., YouTube) using QUIC as transport protocol.

Step 2) Before starting the application (e.g., YouTube), the UE's application entity (YouTube) triggers a Policy Activation Request message to the UE's Network Assistance entity (in 3GPP terminology, this entity is called "5G Media Functions," but embodiments of the disclosure is not restricted to Media), by means of reusing/extending the API described in 3GPP TS 26.501 (e.g., M6d). This Policy Activation Request message will include as parameters the application identifier (e.g., appId=YouTube), and an indication to request COPE (e.g., COPE required=YES) (an enhancement function). By utilizing the API between the UE's application and the network assistance client to request traffic enhancement (e.g., QoS related or charging related) on applications between a UE (or another wireless device) and a server, embodiments of the disclosure provide efficient ways for the applications to traverse a wireless network of a network operator and reach an application server of a service provider, so that traffic enhancement may be performed on the traffic to comply with the SLAs for the applications.

Note that in prior approaches without embodiments of the disclosure, a wireless device such as the UE cannot indicate a request for an enhancement function in a policy activation request and thus do not provide a sufficient QoE for the end-user.

Step 3) The UE's Network Assistance client triggers a Policy Activation Request message to the NA AF entity, including the same parameters from Step 2: the application identifier (e.g., appId=YouTube) and an indication to request COPE (e.g., COPE required=YES).

Step 4) The NA AF authorizes the request and triggers a Policy Activation Request message to the PCF, including the same parameters, i.e., relaying, from Steps 2 and 3: the application identifier (e.g., appId=YouTube) and an indication to request COPE (e.g., COPE required=YES).

Steps 5 and 6) The PCF creates/updates the corresponding PCC rule(s) (based on the NA AF request) and triggers a Npcf_SMPolicyControl_Modify Request message to the SMF, including the same parameters from Steps 3 and 4: the application identifier (e.g., appId=YouTube) and an indication to request COPE (e.g., COPE required=YES). It is proposed to extend the PCC rule with COPE policies. For example, the updated PCC rule may include the following: (1) appID=YouTube, and (2) Policy and Charging actions (e.g., to charge this traffic with a certain Rating Group or to apply a certain QoS action, e.g., high QoS) to request a performance enhancement function for the YouTube traffic for this particular user PDU session.

Steps 7 and 8) The SMF then requests the UPF to forward the application traffic to a COPE entity by triggering a packet flow control protocol (PFCP) Session Modification Request including at least the following parameters: a packet detection rule (PDR) with packet detection information (PDI) (e.g., appId=YouTube) and a forward action rule (FAR) including a Forwarding Policy indicating this traffic should be forwarded to the COPE entity. Note that the PDR/PDI is used to include rules to detect user plane traffic (e.g., YouTube) and the FAR is to indicate where to forward the traffic to.

Steps 9 and 10) The UPF selects a COPE entity (according to the FAR received in Step 8) and returns the relevant COPE information (e.g., Global ID or CNAME, Validity time, COPE node certificate, and the COPE IP address (optionally)) to the SMF in the PFCP Session Modification Response message. Note that in prior approaches without embodiments of the disclosure, the session modification response message merely indicates that the modification has been successful, and embodiments of the disclosure enhance the session modification response message with performance enhancement information such as the relevant COPE information.

Step 11) The SMF triggers a Npcf_SMPolicyControl_Modify Response message to the PCF, including the COPE information (e.g., Global ID or CNAME, Validity time, COPE node certificate, Optional COPE IP address).

Step 12) The PCF triggers a Policy Activation Response message to the NA AF, including the COPE information from Step 11 (e.g., Global ID or CNAME, Validity time, COPE node certificate, Optional COPE IP address).

Step 13) The NA AF triggers a Policy Activation Response message to the UE's Network Assistance entity, including the COPE information (e.g., Global ID or CNAME, Validity time, COPE node certificate, Optional COPE IP address).

Step 14) The UE's Network Assistance entity triggers a Policy Activation Response message to the UE's Application entity, including the COPE information (e.g., Global ID or CNAME, Validity time, COPE node certificate, Optional COPE IP address).

Step 15) The UE application (e.g., YouTube) will use the COPE information to identify the COPE entity or a COPE instance of the COPE entity (e.g., either through Global ID or CNAME by means of an existing domain name system (DNS), or directly through the COPE IP address, when provided). When this is done, the application client (e.g., YouTube app) may establish a connection towards the COPE instance (e.g., application client creating an outer QUIC connection to the COPE instance) and YouTube application traffic will pass through the COPE instance.

As long as the COPE information is valid (as indicated by the validity time), the UE can use this information and connection to the COPE instance without re-requesting the information over the 5G Network Assistance API. In case the Validity time expires, the UE triggers a new Policy Activation Request, allowing the network to potentially select a different COPE instance. It is assumed that, as part of the SLA between the network operator and the content provider, the UE application client (e.g., YouTube app) is well behaved and YouTube traffic (and not other) will pass through the COPE instance.

Finally, not shown in Figures 6A-B, a COPE entity could register itself in the network resource function (NRF) (e.g., when the node implementing the COPE entity powers on) and indicate its capabilities and enhancement functions (e.g., the COPE entity being aimed for Traffic Optimization, Probing, etc.), so that the right COPE instance is selected based on these capabilities. In a particular case, a COPE entity may be a logical function inside the UPF, where the UPF will register the COPE capabilities in the NRF, influencing in UPF selection/reselection. Figures 6A-B only assume a basic use case where the UE requests a general COPE (COPE required = YES) and not specific COPE capabilities.

### Operations at Network Node and Wireless Device

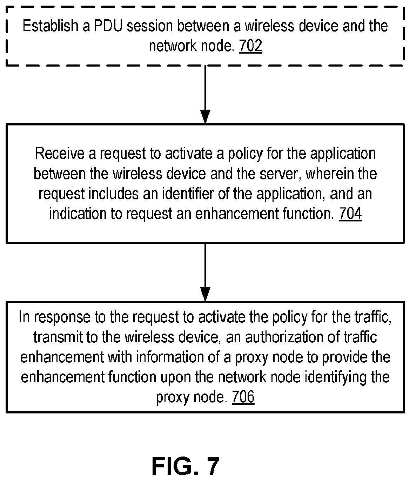

**Figure 7** is a flow diagram showing the operations at a network node for using the network assistance for traffic enhancement per some embodiments. The network node performs a network assistance application function (NA AF) in one embodiment. The operations are for traffic enhancement to apply to an application between a wireless device and a server, and the application is to be delivered using a QUIC session.

At reference 702, a PDU session is established between the wireless device and the network device as explained herein above relating to reference 532. At reference 704, the network device receives, from the wireless device, a request to activate a policy for the application between the wireless device and the server. The request to activate the policy is explained herein above relating to reference 542 and steps 1 to 3 of Figure 6A.

At reference 706, in response to the request to activate the policy for the application, the network node transmits, to the wireless device, an authorization of traffic enhancement with information of a proxy node to provide the enhancement function upon the network node identifying the proxy node. In one embodiment, the proxy node implements a COPE entity discussed herein above.

The operations between the network node and the wireless device may be through a network assistance API in embodiments of the disclosure as discussed herein above. Thus, the network assistance API is not limited to media applications as described in 3GPP TS 26.501 but can be used to enhance the QUIC session on different types of traffic and by applying a variety of charging related and/or QoS related enhancement functions.

The authorization of the traffic enhancement and the identification of the proxy node is explained herein above relating to reference 544 and 546, and also steps 4 to 13 of Figures 6A-B.

In one embodiment, the authorization of traffic enhancement is transmitted with a lifetime indicating a period during which the enhancement function is available to the wireless device to open the QUIC session and request the enhancement function. The lifetime is the validity time discussed herein above in some embodiments.

In one embodiment, the information of the proxy node to provide the enhancement function includes one or more of the following: a global identifier or a common name of the proxy node, a certificate of the proxy node, an Internet Protocol (IP) address and/or port of the proxy node, and an indication of one or more functions that are provided by the proxy node.

In one embodiment, the network node performs a network assistance application function (NA AF), and the identification of the proxy node includes transmitting a policy activation request message to a policy control function (PCF) upon receiving the request to activate the policy, where the policy activation request message includes the application identifier and the indication to request the enhancement function; and receiving a policy activation response message from the PCF, where the policy activation response message includes the information of the proxy node to provide the enhancement function. One embodiment of these operations is explained by steps 4 and 12 of Figures 6A-B and related discussion.

In one embodiment, upon receiving the policy activation request message from the NA AF, the PCF is to perform the following: updating or creating one or more policy and charging control rules; transmitting a policy control modify request message to a session management function (SMF); receiving a policy control modify response message from the SMF, wherein the policy control modify response message includes the information of the proxy node to provide the enhancement function; and transmitting the policy activation response message to the NA AF. One embodiment of these operations is explained by steps 4-5 and 11-12 of Figures 6A-B and related discussion, where the policy control modify request message is a Npcf_SMPolicyControl_Modify Request message, and the policy control modify response message is a Npcf_SMPolicyControl_Modify Response message.

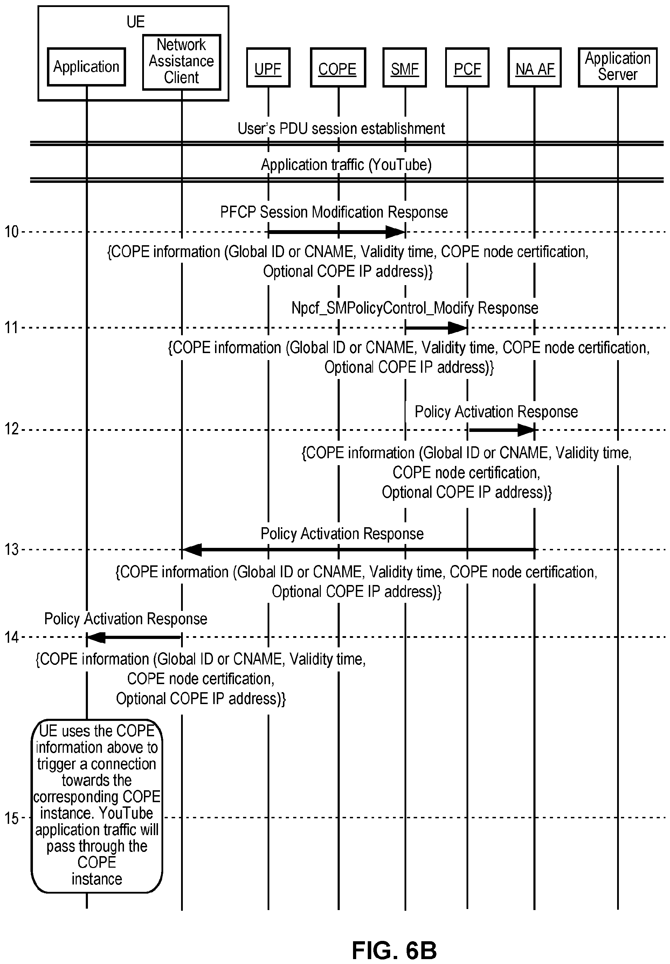

In one embodiment, upon receiving the policy control modify request message, the SMF is to perform the following: transmitting a packet flow control protocol session modification request message to a user plane function (UPF); receiving a packet flow control protocol session modification response message from the UPF, where the packet flow control protocol session modification response includes the information of the proxy node to provide the enhancement function; and transmitting the policy control modify response message to the PCF. One embodiment of these operations is explained by steps 6-7 and 10 of Figure 6 and related discussion, where the packet flow control protocol session modification request message is a packet flow control protocol (PFCP) Session Modification Request, and the packet flow control protocol session modification response message is a PFCP Session Modification Response message.

In one embodiment, upon receiving the packet flow control protocol session modification request message, the UPF is to perform: selecting a proxy node to perform the enhancement function; and transmitting the packet flow control protocol session modification response message to the SMF. One embodiment of these operations is explained by steps 8 and 10 of Figure 6 and related discussion.

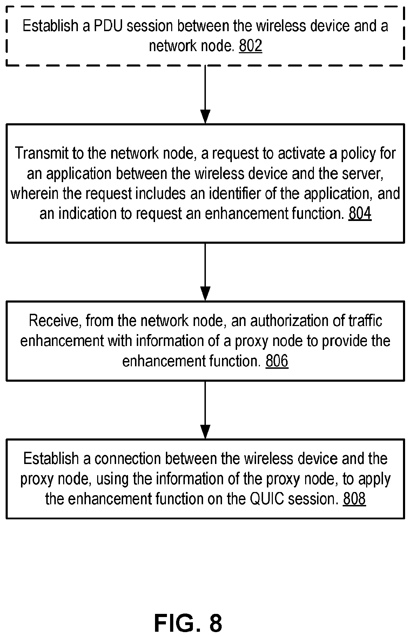

**Figure 8** is a flow diagram showing the operations at a wireless device for using the network assistance for traffic enhancement per some embodiments. The wireless device is a UE in one embodiment. The operations are for traffic enhancement to apply to an application between a wireless device and a server, and the application is to be delivered using a QUIC session.

At reference 802, a PDU session is established between the wireless device and the network device as explained herein above relating to reference 532. At reference 804, the wireless device transmits to the network node a request to activate a policy for the application between the wireless device and the server, where the request includes an identifier of the application, and an indication to request an enhancement function. The request to activate the policy is explained herein above relating to reference 542 and steps 1 to 3 of Figure 6A.

At reference 806, the wireless device receives from the network node an authorization of traffic enhancement with information of a proxy node to provide the enhancement function. One embodiment of these operations is explained by reference 546 and steps 13 and 14 of Figure 6B and related discussion.

At reference 808, the wireless device establishes a connection between the wireless device and the proxy node, using the information of the proxy node, to apply the enhancement function on the QUIC session.

In one embodiment, the connection between the wireless device and the proxy node uses an outer connection of the QUIC session for the application, wherein an inner connection of the QUIC session is for an end-to-end connection between the wireless device and the server.

In one embodiment, the authorization of traffic enhancement is transmitted with a lifetime indicating a period during which the enhancement function is available to use. The lifetime is the validity time discussed herein above in some embodiments.

In one embodiment, the information of the proxy node to provide the enhancement function includes one or more of the following: a global identifier or a common name of the proxy node, a certificate of the proxy node, an Internet Protocol (IP) address and/or port of the proxy node, and an indication of one or more functions that are provided by the proxy node.

Through the request to activate the policy for an application and its response, embodiments of the disclosure provide ways for a wireless device (e.g., a UE) to collaborate with the network operator and/or the service provider to perform one or more enhancement functions to make the QUIC traffic session comply with a SLA between the network operator and service provider for the application to be used by the wireless device. Since the QUIC traffic session is encrypted and the proxy node in embodiments of the disclosure offers traffic enhancement on the application traffic in the encrypted environment, embodiments of the disclosure make QUIC-based applications more secure (through encryption) and robust (through proxy-based enhancement).

### Embodiments of Network Node and Wireless Device

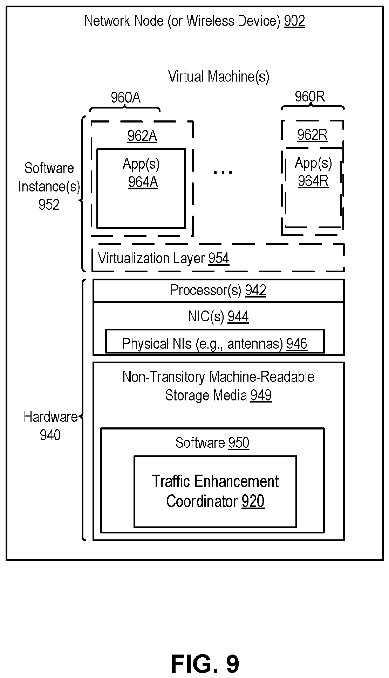

**Figure 9** illustrates a network node per one embodiment of the disclosure. The network node 902 may be implemented using custom application-specific integrated-circuits (ASICs) as processors and a special-purpose operating system (OS), or common off-the-shelf (COTS) processors and a standard OS.

The network node 902 includes hardware 940 comprising of a set of one or more processors 942 (which are typically COTS processors or processor cores or ASICs) and physical NIs 946, as well as non-transitory machine-readable storage media 949 having stored therein software 950. During operation, the one or more processors 942 may execute the software 950 to instantiate one or more sets of one or more applications 964A-R. While one embodiment does not implement virtualization, alternative embodiments may use different forms of virtualization. For example, in one such alternative embodiment, the virtualization layer 954 represents the kernel of an operating system (or a shim executing on a base operating system) that allows for the creation of multiple instances 962A-R called software containers that may each be used to execute one (or more) of the sets of applications 964A-R. The multiple software containers (also called virtualization engines, virtual private servers, or jails) are user spaces (typically a virtual memory space) that are separate from each other and separate from the kernel space in which the operating system is run. The set of applications running in a given user space, unless explicitly allowed, cannot access the memory of the other processes. In another such alternative embodiment, the virtualization layer 954 represents a hypervisor (sometimes referred to as a virtual machine monitor (VMM)) or a hypervisor executing on top of a host operating system, and each of the sets of applications 964A-R run on top of a guest operating system within an instance 962A-R called a virtual machine (which may in some cases be considered a tightly isolated form of software container) that run on top of the hypervisor - the guest operating system and application may not know that they are running on a virtual machine as opposed to running on a "bare metal" host electronic device, or through para-virtualization the operating system and/or application may be aware of the presence of virtualization for optimization purposes. In yet other alternative embodiments, one, some, or all of the applications are implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 940, directly on a hypervisor (in which case the unikernel is sometimes described as running within a LibOS virtual machine), or in a software container, embodiments can be implemented fully with unikernels running directly on a hypervisor represented by virtualization layer 954, unikernels running within software containers represented by instances 962A-R, or as a combination of unikernels and the above-described techniques (e.g., unikernels and virtual machines both run directly on a hypervisor, unikernels and sets of applications that are run in different software containers).

The software 950 contains a traffic enhancement coordinator 920. The traffic enhancement coordinator 920 may perform operations in the one or more of exemplary methods/operations, described with reference to earlier figures such as Figures 2-8. The instantiation of the one or more sets of one or more applications 964A-R, as well as virtualization if implemented, are collectively referred to as software instance(s) 952. Each set of applications 964A-R, corresponding virtualization construct (e.g., instance 962A-R) if implemented, and that part of the hardware 940 that executes them (be it hardware dedicated to that execution and/or time slices of hardware temporally shared), forms a separate virtual network node 960A-R.

A network interface (NI) may be physical or virtual. In the context of IP, an interface address is an IP address assigned to a NI, be it a physical NI or a virtual NI. A virtual NI may be associated with a physical NI, with another virtual interface, or stand on its own (e.g., a loopback interface, a point-to-point protocol interface). A NI (physical or virtual) may be numbered (a NI with an IP address) or unnumbered (a NI without an IP address). The physical network interface 946 may include one or more antenna of the network node 902. An antenna port may or may not correspond to a physical antenna.

Note that a wireless device may be implemented using hardware and/or software same or similar to the ones used by the network node discussed herein above.

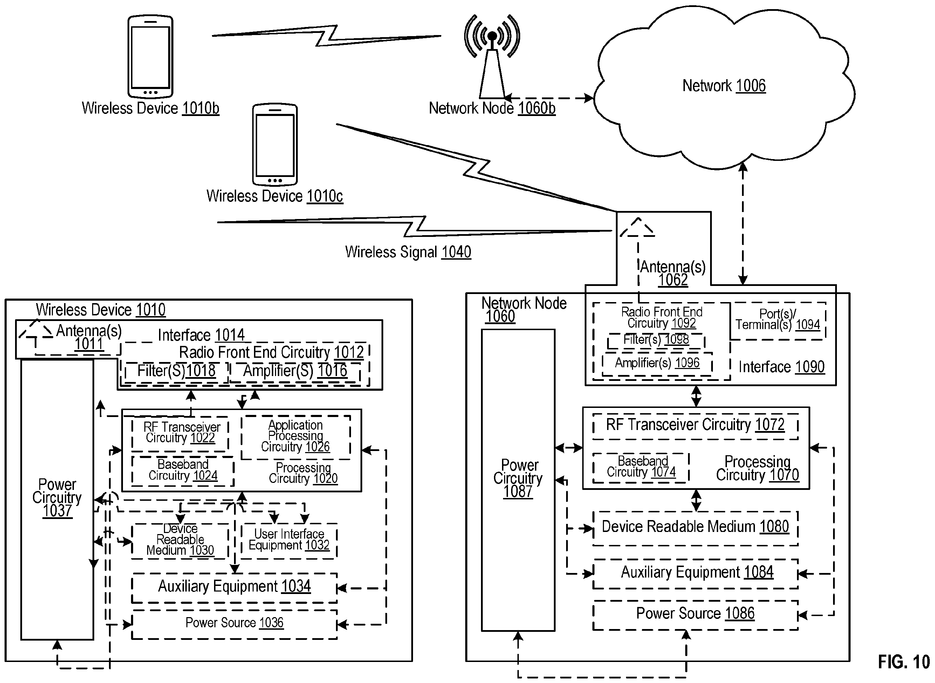

### Figure 10: A wireless network in accordance with some embodiments.

Although the subject matter described herein may be implemented in any appropriate type of system using any suitable components, the embodiments disclosed herein are described in relation to a wireless network, such as the example wireless network illustrated in Figure 10. For simplicity, the wireless network of Figure 10 only depicts network 1006, network nodes 1060 and 1060b, and WDs 1010, 1010b, and 1010c. In practice, a wireless network may further include any additional elements suitable to support communication between wireless devices or between a wireless device and another communication device, such as a landline telephone, a service provider, or any other network node or end device. Of the illustrated components, network node 1060 and wireless device (WD) 1010 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the Institute of Electrical and Electronics Engineers (IEEE) 802.11 standards; and/or any other appropriate wireless communication standard, such as the Worldwide Interoperability for Microwave Access (WiMax), Bluetooth, Z-Wave, and/or ZigBee standards.

Network 1006 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1060 and WD 1010 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged, and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and new radio (NR) NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., mobile switching centers (MSCs), mobility management entities (MMEs)), operational and management (O & M) nodes, operation support system (OSS) nodes, self-organizing network (SON) nodes, positioning nodes (e.g., Evolved Serving Mobile Location Centers (E-SMLCs)), and/or Minimization of Drive Tests (MDTs). As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 10, network node 1060 includes processing circuitry 1070, device readable medium 1080, interface 1090, auxiliary equipment 1084, power source 1086, power circuitry 1087, and antenna 1062. Although network node 1060 illustrated in the example wireless network of Figure 10 may represent a device that includes the illustrated combination of hardware components, other embodiments may comprise network nodes with different combinations of components. It is to be understood that a network node comprises any suitable combination of hardware and/or software needed to perform the tasks, features, functions, and methods disclosed herein. Moreover, while the components of network node 1060 are depicted as single boxes located within a larger box, or nested within multiple boxes, in practice, a network node may comprise multiple different physical components that make up a single illustrated component (e.g., device readable medium 1080 may comprise multiple separate hard drives as well as multiple RAM modules).

Similarly, network node 1060 may be composed of multiple physically separate components (e.g., a NodeB component and an RNC component, or a BTS component and a BSC component, etc.), which may each have their own respective components. In certain scenarios in which network node 1060 comprises multiple separate components (e.g., BTS and BSC components), one or more of the separate components may be shared among several network nodes. For example, a single RNC may control multiple NodeBs. In such a scenario, each unique NodeB and RNC pair may, in some instances, be considered a single separate network node. In some embodiments, network node 1060 may be configured to support multiple radio access technologies (RATs). In such embodiments, some components may be duplicated (e.g., separate device readable medium 1080 for the different RATs) and some components may be reused (e.g., the same antenna 1062 may be shared by the RATs). Network node 1060 may also include multiple sets of the various illustrated components for different wireless technologies integrated into network node 1060, such as, for example, GSM, Wideband Code Division Multiple Access (WCDMA), LTE, NR, WiFi, or Bluetooth wireless technologies. These wireless technologies may be integrated into the same or different chip or set of chips and other components within network node 1060.

Processing circuitry 1070 is configured to perform any determining, calculating, or similar operations (e.g., certain obtaining operations) described herein as being provided by a network node. These operations performed by processing circuitry 1070 may include processing information obtained by processing circuitry 1070 by, for example, converting the obtained information into other information, comparing the obtained information or converted information to information stored in the network node, and/or performing one or more operations based on the obtained information or converted information, and as a result of said processing making a determination.

Processing circuitry 1070 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with, other network node 1060 components, such as device readable medium 1080, network node 1060 functionality. For example, processing circuitry 1070 may execute instructions stored in device readable medium 1080 or in memory within processing circuitry 1070. Such functionality may include providing any of the various wireless features, functions, or benefits discussed herein. In some embodiments, processing circuitry 1070 may include a system on a chip (SOC).

In some embodiments, processing circuitry 1070 may include one or more of radio frequency (RF) transceiver circuitry 1072 and baseband processing circuitry 1074. In some embodiments, radio frequency (RF) transceiver circuitry 1072 and baseband processing circuitry 1074 may be on separate chips (or sets of chips), boards, or units, such as radio units and digital units. In alternative embodiments, part or all of RF transceiver circuitry 1072 and baseband processing circuitry 1074 may be on the same chip or set of chips, boards, or units.

In certain embodiments, some or all of the functionality described herein as being provided by a network node, base station, eNB, or other such network device may be performed by processing circuitry 1070 executing instructions stored on device readable medium 1080 or memory within processing circuitry 1070. In alternative embodiments, some or all of the functionality may be provided by processing circuitry 1070 without executing instructions stored on a separate or discrete device readable medium, such as in a hard-wired manner. In any of those embodiments, whether executing instructions stored on a device readable storage medium or not, processing circuitry 1070 can be configured to perform the described functionality. The benefits provided by such functionality are not limited to processing circuitry 1070 alone or to other components of network node 1060, but are enjoyed by network node 1060 as a whole, and/or by end users and the wireless network generally.

Device readable medium 1080 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD), or a Digital Video Disk (DVD)), and/or any other volatile or non-volatile, non-transitory device readable, and/or computer-executable memory devices that store information, data, and/or instructions that may be used by processing circuitry 1070. Device readable medium 1080 may store any suitable instructions, data, or information, including a computer program, software, an application including one or more of logic, rules, code, tables, etc., and/or other instructions capable of being executed by processing circuitry 1070 and utilized by network node 1060. Device readable medium 1080 may be used to store any calculations made by processing circuitry 1070 and/or any data received via interface 1090. In some embodiments, processing circuitry 1070 and device readable medium 1080 may be considered to be integrated.

Interface 1090 is used in the wired or wireless communication of signaling and/or data between network node 1060, network 1006, and/or WDs 1010. As illustrated, interface 1090 comprises port(s)/terminal(s) 1094 to send and receive data, for example, to and from network 1006 over a wired connection. Interface 1090 also includes radio front end circuitry 1092 that may be coupled to, or in certain embodiments a part of, antenna 1062. Radio front end circuitry 1092 comprises filters 1098 and amplifiers 1096. Radio front end circuitry 1092 may be connected to antenna 1062 and processing circuitry 1070. Radio front end circuitry may be configured to condition signals communicated between antenna 1062 and processing circuitry 1070. Radio front end circuitry 1092 may receive digital data that is to be sent out to other network nodes or WDs via a wireless connection. Radio front end circuitry 1092 may convert the digital data into a radio signal having the appropriate channel and bandwidth parameters using a combination of filters 1098 and/or amplifiers 1096. The radio signal may then be transmitted via antenna 1062. Similarly, when receiving data, antenna 1062 may collect radio signals which are then converted into digital data by radio front end circuitry 1092. The digital data may be passed to processing circuitry 1070. In other embodiments, the interface may comprise different components and/or different combinations of components.

In certain alternative embodiments, network node 1060 may not include separate radio front end circuitry 1092; instead, processing circuitry 1070 may comprise radio front end circuitry and may be connected to antenna 1062 without separate radio front end circuitry 1092. Similarly, in some embodiments, all or some of RF transceiver circuitry 1072 may be considered a part of interface 1090. In still other embodiments, interface 1090 may include one or more ports or terminals 1094, radio front end circuitry 1092, and RF transceiver circuitry 1072, as part of a radio unit (not shown), and interface 1090 may communicate with baseband processing circuitry 1074, which is part of a digital unit (not shown).

Antenna 1062 may include one or more antennas, or antenna arrays, configured to send and/or receive wireless signals. Antenna 1062 may be coupled to radio front end circuitry 1090 and may be any type of antenna capable of transmitting and receiving data and/or signals wirelessly. In some embodiments, antenna 1062 may comprise one or more omni-directional, sector, or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as multiple-input and multiple-output (MIMO). In certain embodiments, antenna 1062 may be separate from network node 1060 and may be connectable to network node 1060 through an interface or port.

Antenna 1062, interface 1090, and/or processing circuitry 1070 may be configured to perform any receiving operations and/or certain obtaining operations described herein as being performed by a network node. Any information, data, and/or signals may be received from a wireless device, another network node, and/or any other network equipment. Similarly, antenna 1062, interface 1090, and/or processing circuitry 1070 may be configured to perform any transmitting operations described herein as being performed by a network node. Any information, data, and/or signals may be transmitted to a wireless device, another network node, and/or any other network equipment.

Power circuitry 1087 may comprise, or be coupled to, power management circuitry and is configured to supply the components of network node 1060 with power for performing the functionality described herein. Power circuitry 1087 may receive power from power source 1086. Power source 1086 and/or power circuitry 1087 may be configured to provide power to the various components of network node 1060 in a form suitable for the respective components (e.g., at a voltage and current level needed for each respective component). Power source 1086 may either be included in, or external to, power circuitry 1087 and/or network node 1060. For example, network node 1060 may be connectable to an external power source (e.g., an electricity outlet) via an input circuitry or interface such as an electrical cable, whereby the external power source supplies power to power circuitry 1087. As a further example, power source 1086 may comprise a source of power in the form of a battery or battery pack which is connected to, or integrated in, power circuitry 1087. The battery may provide backup power should the external power source fail. Other types of power sources, such as photovoltaic devices, may also be used.

Alternative embodiments of network node 1060 may include additional components beyond those shown in Figure 10 that may be responsible for providing certain aspects of the network node's functionality, including any of the functionality described herein and/or any functionality necessary to support the subject matter described herein. For example, network node 1060 may include user interface equipment to allow input of information into network node 1060 and to allow output of information from network node 1060. This may allow a user to perform diagnostic, maintenance, repair, and other administrative functions for network node 1060.

As used herein, wireless device (WD) refers to a device capable, configured, arranged, and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may, in a 3GPP context, be referred to as an MTC device. As one particular example, the WD may be a UE implementing the 3GPP narrow band internet of things (NB-IoT) standard. Particular examples of such machines or devices are sensors, metering devices such as power meters, industrial machinery, home or personal appliances (e.g., refrigerators, televisions, etc.), or personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1010 includes antenna 1011, interface 1014, processing circuitry 1020, device readable medium 1030, user interface equipment 1032, auxiliary equipment 1034, power source 1036, and power circuitry 1037. WD 1010 may include multiple sets of one or more of the illustrated components for different wireless technologies supported by WD 1010, such as, for example, GSM, WCDMA, LTE, NR, WiFi, WiMAX, or Bluetooth wireless technologies, just to mention a few. These wireless technologies may be integrated into the same or different chips or set of chips as other components within WD 1010.

Antenna 1011 may include one or more antennas or antenna arrays, configured to send and/or receive wireless signals, and is connected to interface 1014. In certain alternative embodiments, antenna 1011 may be separate from WD 1010 and be connectable to WD 1010 through an interface or port. Antenna 1011, interface 1014, and/or processing circuitry 1020 may be configured to perform any receiving or transmitting operations described herein as being performed by a WD. Any information, data, and/or signals may be received from a network node and/or another WD. In some embodiments, radio front end circuitry and/or antenna 1011 may be considered an interface.

As illustrated, interface 1014 comprises radio front end circuitry 1012 and antenna 1011. Radio front end circuitry 1012 comprise one or more filters 1018 and amplifiers 1016. Radio front end circuitry 1014 is connected to antenna 1011 and processing circuitry 1020, and is configured to condition signals communicated between antenna 1011 and processing circuitry 1020. Radio front end circuitry 1012 may be coupled to or a part of antenna 1011. In some embodiments, WD 1010 may not include separate radio front end circuitry 1012; rather, processing circuitry 1020 may comprise radio front end circuitry and may be connected to antenna 1011. Similarly, in some embodiments, some or all of RF transceiver circuitry 1022 may be considered a part of interface 1014. Radio front end circuitry 1012 may receive digital data that is to be sent out to other network nodes or WDs via a wireless connection. Radio front end circuitry 1012 may convert the digital data into a radio signal having the appropriate channel and bandwidth parameters using a combination of filters 1018 and/or amplifiers 1016. The radio signal may then be transmitted via antenna 1011. Similarly, when receiving data, antenna 1011 may collect radio signals which are then converted into digital data by radio front end circuitry 1012. The digital data may be passed to processing circuitry 1020. In other embodiments, the interface may comprise different components and/or different combinations of components.

Processing circuitry 1020 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1010 components, such as device readable medium 1030, WD 1010 functionality. Such functionality may include providing any of the various wireless features or benefits discussed herein. For example, processing circuitry 1020 may execute instructions stored in device readable medium 1030 or in memory within processing circuitry 1020 to provide the functionality disclosed herein.

As illustrated, processing circuitry 1020 includes one or more of RF transceiver circuitry 1022, baseband processing circuitry 1024, and application processing circuitry 1026. In other embodiments, the processing circuitry may comprise different components and/or different combinations of components. In certain embodiments, processing circuitry 1020 of WD 1010 may comprise a SOC. In some embodiments, RF transceiver circuitry 1022, baseband processing circuitry 1024, and application processing circuitry 1026 may be on separate chips or sets of chips. In alternative embodiments, part or all of baseband processing circuitry 1024 and application processing circuitry 1026 may be combined into one chip or set of chips, and RF transceiver circuitry 1022 may be on a separate chip or set of chips. In still alternative embodiments, part or all of RF transceiver circuitry 1022 and baseband processing circuitry 1024 may be on the same chip or set of chips, and application processing circuitry 1026 may be on a separate chip or set of chips. In yet other alternative embodiments, part or all of RF transceiver circuitry 1022, baseband processing circuitry 1024, and application processing circuitry 1026 may be combined in the same chip or set of chips. In some embodiments, RF transceiver circuitry 1022 may be a part of interface 1014. RF transceiver circuitry 1022 may condition RF signals for processing circuitry 1020.

In certain embodiments, some or all of the functionality described herein as being performed by a WD may be provided by processing circuitry 1020 executing instructions stored on device readable medium 1030, which in certain embodiments may be a computer-readable storage medium. In alternative embodiments, some or all of the functionality may be provided by processing circuitry 1020 without executing instructions stored on a separate or discrete device readable storage medium, such as in a hard-wired manner. In any of those particular embodiments, whether executing instructions stored on a device readable storage medium or not, processing circuitry 1020 can be configured to perform the described functionality. The benefits provided by such functionality are not limited to processing circuitry 1020 alone or to other components of WD 1010, but are enjoyed by WD 1010 as a whole, and/or by end users and the wireless network generally.

Processing circuitry 1020 may be configured to perform any determining, calculating, or similar operations (e.g., certain obtaining operations) described herein as being performed by a WD. These operations, as performed by processing circuitry 1020, may include processing information obtained by processing circuitry 1020 by, for example, converting the obtained information into other information, comparing the obtained information or converted information to information stored by WD 1010, and/or performing one or more operations based on the obtained information or converted information, and as a result of said processing making a determination.

Device readable medium 1030 may be operable to store a computer program, software, an application including one or more of logic, rules, code, tables, etc., and/or other instructions capable of being executed by processing circuitry 1020. Device readable medium 1030 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable, and/or computer executable memory devices that store information, data, and/or instructions that may be used by processing circuitry 1020. In some embodiments, processing circuitry 1020 and device readable medium 1030 may be considered to be integrated.

User interface equipment 1032 may provide components that allow for a human user to interact with WD 1010. Such interaction may be of many forms, such as visual, audial, tactile, etc. User interface equipment 1032 may be operable to produce output to the user and to allow the user to provide input to WD 1010. The type of interaction may vary depending on the type of user interface equipment 1032 installed in WD 1010. For example, if WD 1010 is a smart phone, the interaction may be via a touch screen; if WD 1010 is a smart meter, the interaction may be through a screen that provides usage (e.g., the number of gallons used) or a speaker that provides an audible alert (e.g., if smoke is detected). User interface equipment 1032 may include input interfaces, devices, and circuits, and output interfaces, devices, and circuits. User interface equipment 1032 is configured to allow input of information into WD 1010 and is connected to processing circuitry 1020 to allow processing circuitry 1020 to process the input information. User interface equipment 1032 may include, for example, a microphone, a proximity or other sensor, keys/buttons, a touch display, one or more cameras, a universal serial bus (USB) port, or other input circuitry. User interface equipment 1032 is also configured to allow output of information from WD 1010, and to allow processing circuitry 1020 to output information from WD 1010. User interface equipment 1032 may include, for example, a speaker, a display, vibrating circuitry, a USB port, a headphone interface, or other output circuitry. Using one or more input and output interfaces, devices, and circuits, of user interface equipment 1032, WD 1010 may communicate with end users and/or the wireless network and allow them to benefit from the functionality described herein.

Auxiliary equipment 1034 is operable to provide more specific functionality which may not be generally performed by WDs. This may comprise specialized sensors for doing measurements for various purposes, interfaces for additional types of communication such as wired communications, etc. The inclusion and type of components of auxiliary equipment 1034 may vary depending on the embodiment and/or scenario.

Power source 1036 may, in some embodiments, be in the form of a battery or battery pack. Other types of power sources, such as an external power source (e.g., an electricity outlet), photovoltaic devices or power cells, may also be used. WD 1010 may further comprise power circuitry 1037 for delivering power from power source 1036 to the various parts of WD 1010 which need power from power source 1036 to carry out any functionality described or indicated herein. Power circuitry 1037 may, in certain embodiments, comprise power management circuitry. Power circuitry 1037 may additionally or alternatively be operable to receive power from an external power source; in which case WD 1010 may be connectable to the external power source (such as an electricity outlet) via input circuitry or an interface such as an electrical power cable. Power circuitry 1037 may also in certain embodiments be operable to deliver power from an external power source to power source 1036. This may be, for example, for the charging of power source 1036. Power circuitry 1037 may perform any formatting, converting, or other modification to the power from power source 1036 to make the power suitable for the respective components of WD 1010 to which power is supplied.

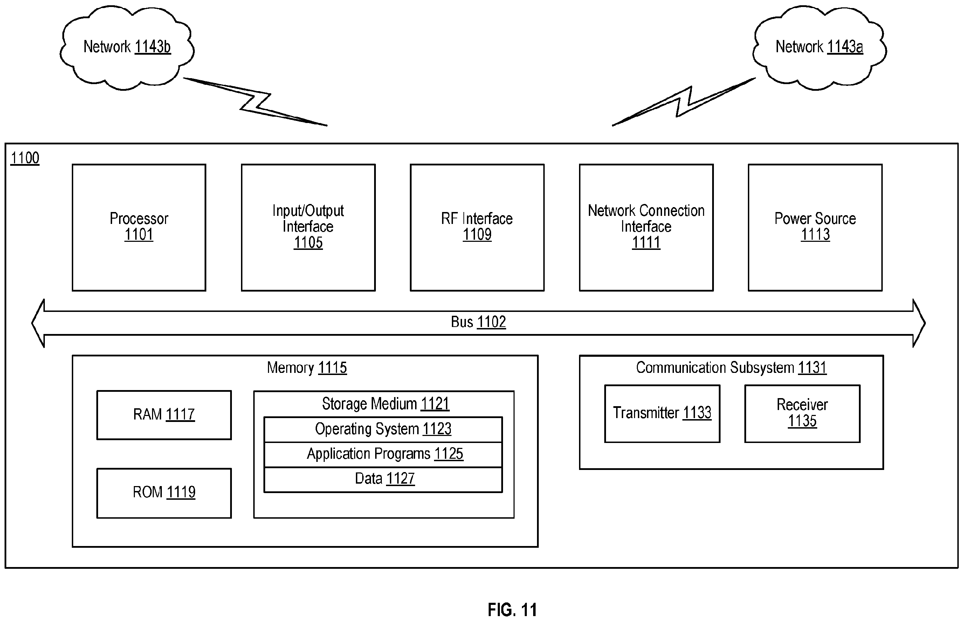

### Figure 11: User Equipment in accordance with some embodiments

Figure 11 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1100 may be any UE identified by the 3^{rd} Generation Partnership Project (3GPP), including a NB-IoT UE, a machine type communication (MTC) UE, and/or an enhanced MTC (eMTC) UE. UE 1100, as illustrated in Figure 11, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeably. Accordingly, although Figure 11 is a UE, the components discussed herein are equally applicable to a WD, and vice-versa.

In Figure 11, UE 1100 includes processing circuitry 1101 that is operatively coupled to input/output interface 1105, radio frequency (RF) interface 1109, network connection interface 1111, memory 1115 including random access memory (RAM) 1117, read-only memory (ROM) 1119, and storage medium 1121 or the like, communication subsystem 1131, power source 1133, and/or any other component, or any combination thereof. Storage medium 1121 includes operating system 1123, application program 1125, and data 1127. In other embodiments, storage medium 1121 may include other similar types of information. Certain UEs may utilize all of the components shown in Figure 11, or only a subset of the components. The level of integration between the components may vary from one UE to another UE. Further, certain UEs may contain multiple instances of a component, such as multiple processors, memories, transceivers, transmitters, receivers, etc.

In Figure 11, processing circuitry 1101 may be configured to process computer instructions and data. Processing circuitry 1101 may be configured to implement any sequential state machine operative to execute machine instructions stored as machine-readable computer programs in the memory, such as one or more hardware-implemented state machines (e.g., in discrete logic, field-programmable gate array (FPGA), ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1101 may include two central processing units (CPUs). Data may be information in a form suitable for use by a computer.

In the depicted embodiment, input/output interface 1105 may be configured to provide a communication interface to an input device, output device, or input and output device. UE 1100 may be configured to use an output device via input/output interface 1105. An output device may use the same type of interface port as an input device. For example, a USB port may be used to provide input to and output from UE 1100. The output device may be a speaker, a sound card, a video card, a display, a monitor, a printer, an actuator, an emitter, a smartcard, another output device, or any combination thereof. UE 1100 may be configured to use an input device via input/output interface 1105 to allow a user to capture information into UE 1100. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 11, RF interface 1109 may be configured to provide a communication interface to RF components such as a transmitter, a receiver, and an antenna. Network connection interface 1111 may be configured to provide a communication interface to network 1143a. Network 1143a may encompass wired and/or wireless networks such as a local-area network (LAN), a wide-area network (WAN), a computer network, a wireless network, a telecommunications network, another like network, or any combination thereof. For example, network 1143a may comprise a Wi-Fi network. Network connection interface 1111 may be configured to include a receiver and a transmitter interface used to communicate with one or more other devices over a communication network according to one or more communication protocols, such as Ethernet, TCP/IP, synchronous optical network (SONET), Asynchronous Transfer Mode (ATM), or the like. Network connection interface 1111 may implement receiver and transmitter functionality appropriate to the communication network links (e.g., optical, electrical, and the like). The transmitter and receiver functions may share circuit components, software or firmware, or alternatively may be implemented separately.

RAM 1117 may be configured to interface via bus 1102 to processing circuitry 1101 to provide storage or caching of data or computer instructions during the execution of software programs such as the operating system, application programs, and device drivers. ROM 1119 may be configured to provide computer instructions or data to processing circuitry 1101. For example, ROM 1119 may be configured to store invariant low-level system code or data for basic system functions such as basic input and output (I/O), startup, or reception of keystrokes from a keyboard that are stored in a non-volatile memory. Storage medium 1121 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1121 may be configured to include operating system 1123, application program 1125 such as a web browser application, a widget or gadget engine or another application, and data file 1127. Storage medium 1121 may store, for use by UE 1100, any of a variety of various operating systems or combinations of operating systems.

Storage medium 1121 may be configured to include a number of physical drive units, such as a redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1121 may allow UE 1100 to access computer-executable instructions, application programs or the like, stored on transitory or non-transitory memory media, to off-load data, or to upload data. An article of manufacture, such as one utilizing a communication system may be tangibly embodied in storage medium 1121, which may comprise a device readable medium.

In Figure 11, processing circuitry 1101 may be configured to communicate with network 1143b using communication subsystem 1131. Network 1143a and network 1143b may be the same network or networks or different network or networks. Communication subsystem 1131 may be configured to include one or more transceivers used to communicate with network 1143b. For example, communication subsystem 1131 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UMTS Terrestrial Radio Access Network (UTRAN), WiMax, or the like. Each transceiver may include transmitter 1133 and/or receiver 1135 to implement transmitter or receiver functionality, respectively, appropriate to the RAN links (e.g., frequency allocations and the like). Further, transmitter 1133 and receiver 1135 of each transceiver may share circuit components, software or firmware, or alternatively may be implemented separately.

In the illustrated embodiment, the communication functions of communication subsystem 1131 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1131 may include cellular communication, Wi-Fi communication, Bluetooth communication, and GPS communication. Network 1143b may encompass wired and/or wireless networks such as a local-area network (LAN), a wide-area network (WAN), a computer network, a wireless network, a telecommunications network, another like network or any combination thereof. For example, network 1143b may be a cellular network, a Wi-Fi network, and/or a near-field network. Power source 1113 may be configured to provide alternating current (AC) or direct current (DC) power to components of UE 1100.

The features, benefits, and/or functions described herein may be implemented in one of the components of UE 1100 or partitioned across multiple components of UE 1100. Further, the features, benefits, and/or functions described herein may be implemented in any combination of hardware, software, or firmware. In one example, communication subsystem 1131 may be configured to include any of the components described herein. Further, processing circuitry 1101 may be configured to communicate with any of such components over bus 1102. In another example, any of such components may be represented by program instructions stored in memory that when executed by processing circuitry 1101 perform the corresponding functions described herein. In another example, the functionality of any of such components may be partitioned between processing circuitry 1101 and communication subsystem 1131. In another example, the non-computationally intensive functions of any of such components may be implemented in software or firmware and the computationally intensive functions may be implemented in hardware.

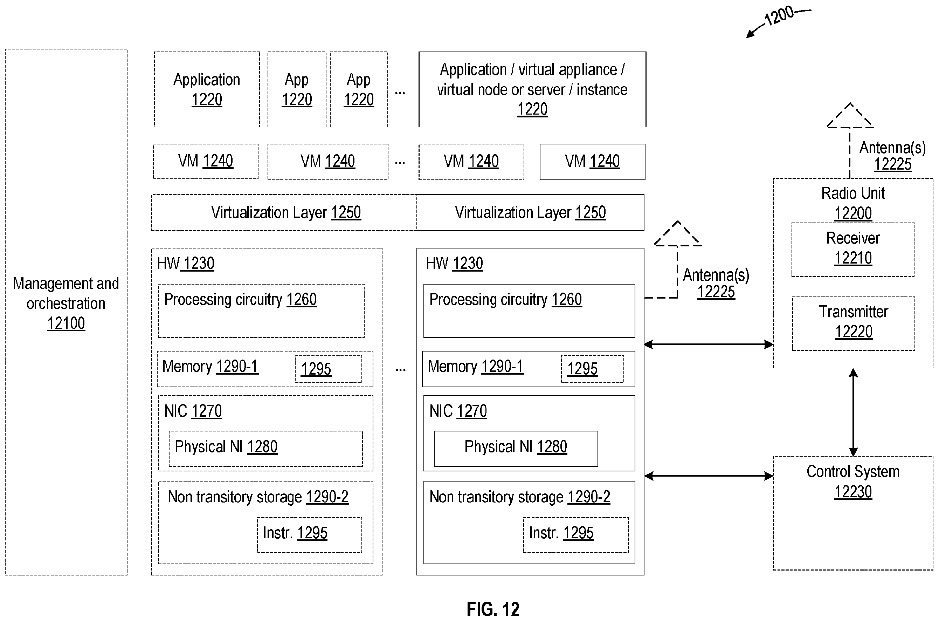

### Figure 12: Virtualization environment in accordance with some embodiments

Figure 12 is a schematic block diagram illustrating a virtualization environment 1200 in which functions implemented by some embodiments may be virtualized. In the present context, virtualizing means creating virtual versions of apparatuses or devices which may include virtualizing hardware platforms, storage devices, and networking resources. As used herein, virtualization can be applied to a node (e.g., a virtualized base station or a virtualized radio access node) or to a device (e.g., a UE, a wireless device, or any other type of communication device), or components thereof and relates to an implementation in which at least a portion of the functionality is implemented as one or more virtual components (e.g., via one or more applications, components, functions, virtual machines, or containers executing on one or more physical processing nodes in one or more networks).

In some embodiments, some or all of the functions described herein may be implemented as virtual components executed by one or more virtual machines implemented in one or more virtual environments 1200 hosted by one or more of hardware nodes 1230. Further, in embodiments in which the virtual node is not a radio access node or does not require radio connectivity (e.g., a core network node), then the network node may be entirely virtualized.

The functions may be implemented by one or more applications 1220 (which may alternatively be called software instances, virtual appliances, network functions, virtual nodes, virtual network functions, etc.) operative to implement some of the features, functions, and/or benefits of some of the embodiments disclosed herein. Applications 1220 are run in virtualization environment 1200 which provides hardware 1230 comprising processing circuitry 1260 and memory 1290. Memory 1290 contains instructions 1295 executable by processing circuitry 1260 whereby application 1220 is operative to provide one or more of the features, benefits, and/or functions disclosed herein.

Virtualization environment 1200 comprises general-purpose or special-purpose network hardware devices 1230 comprising a set of one or more processors or processing circuitry 1260, which may be commercial off-the-shelf (COTS) processors, dedicated Application Specific Integrated Circuits (ASICs), or any other type of processing circuitry including digital or analog hardware components or special purpose processors. Each hardware device may comprise memory 1290-1 which may be non-persistent memory for temporarily storing instructions 1295 or software executed by processing circuitry 1260. Each hardware device may comprise one or more network interface controllers (NICs) 1270, also known as network interface cards, which include physical network interface 1280. Each hardware device may also include non-transitory, persistent, machine-readable storage media 1290-2 having stored therein software 1295 and/or instructions executable by processing circuitry 1260. Software 1295 may include any type of software including software for instantiating one or more virtualization layers 1250 (also referred to as hypervisors), software to execute virtual machines 1240 as well as software allowing it to execute functions, features, and/or benefits described in relation with some embodiments described herein.

Virtual machines 1240 comprise virtual processing, virtual memory, virtual networking or interface, and virtual storage, and may be run by a corresponding virtualization layer 1250 or hypervisor. Different embodiments of the instance of virtual appliance 1220 may be implemented on one or more of virtual machines 1240, and the implementations may be made in different ways.

During operation, processing circuitry 1260 executes software 1295 to instantiate the hypervisor or virtualization layer 1250, which may sometimes be referred to as a virtual machine monitor (VMM). Virtualization layer 1250 may present a virtual operating platform that appears like networking hardware to virtual machine 1240.

As shown in Figure 12, hardware 1230 may be a standalone network node with generic or specific components. Hardware 1230 may comprise antenna 12225 and may implement some functions via virtualization. Alternatively, hardware 1230 may be part of a larger cluster of hardware (e.g., such as in a data center or customer premise equipment (CPE)) where many hardware nodes work together and are managed via management and orchestration (MANO) 12100, which, among others, oversees lifecycle management of applications 1220.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 1240 may be a software implementation of a physical machine that runs programs as if they were executing on a physical, non-virtualized machine. Each of virtual machines 1240, and that part of hardware 1230 that executes that virtual machine, be it hardware dedicated to that virtual machine and/or hardware shared by that virtual machine with others of the virtual machines 1240, forms a separate virtual network elements (VNE).

Still in the context of NFV, Virtual Network Function (VNF) is responsible for handling specific network functions that run in one or more virtual machines 1240 on top of hardware networking infrastructure 1230 and corresponds to application 1220 in Figure 12.

In some embodiments, one or more radio units 12200 that each include one or more transmitters 12220 and one or more receivers 12210 may be coupled to one or more antennas 12225. Radio units 12200 may communicate directly with hardware nodes 1230 via one or more appropriate network interfaces and may be used in combination with the virtual components to provide a virtual node with radio capabilities, such as a radio access node or a base station.

In some embodiments, some signaling can be affected with the use of control system 12230 which may alternatively be used for communication between the hardware nodes 1230 and radio units 12200.

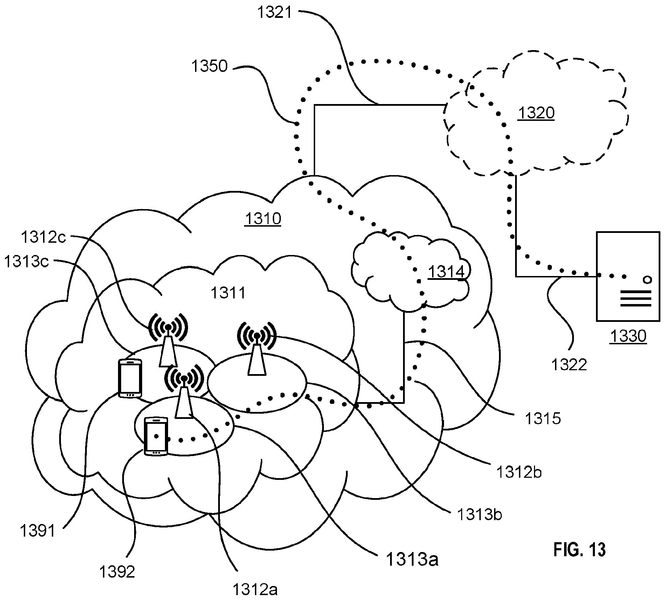

### Figure 13: Telecommunication network connected via an intermediate network to a host computer in accordance with some embodiments

With reference to Figure 13, in accordance with an embodiment, a communication system includes telecommunication network 1310, such as a 3GPP-type cellular network, which comprises access network 1311, such as a radio access network, and core network 1314. Access network 1311 comprises a plurality of base stations 1312a, 1312b, 1312c, such as NBs, eNBs, gNBs, or other types of wireless access points, each defining a corresponding coverage area 1313a, 1313b, 1313c. Each base station 1312a, 1312b, 1312c is connectable to core network 1314 over a wired or wireless connection 1315. A first UE 1391 located in coverage area 1313c is configured to wirelessly connect to, or be paged by, the corresponding base station 1312c. A second UE 1392 in coverage area 1313a is wirelessly connectable to the corresponding base station 1312a. While a plurality of UEs 1391, 1392 are illustrated in this example, the disclosed embodiments are equally applicable to a situation where a sole UE is in the coverage area or where a sole UE is connecting to the corresponding base station 1312.

Telecommunication network 1310 is itself connected to host computer 1330, which may be embodied in the hardware and/or software of a standalone server, a cloud-implemented server, a distributed server, or as processing resources in a server farm. Host computer 1330 may be under the ownership or control of a service provider or may be operated by the service provider or on behalf of the service provider. Connections 1321 and 1322 between telecommunication network 1310 and host computer 1330 may extend directly from core network 1314 to host computer 1330 or may go via an optional intermediate network 1320. Intermediate network 1320 may be one of, or a combination of more than one of, a public, private, or hosted network; intermediate network 1320, if any, may be a backbone network or the Internet; in particular, intermediate network 1320 may comprise two or more sub-networks (not shown).

The communication system of Figure 13 as a whole enables connectivity between the connected UEs 1391, 1392, and host computer 1330. The connectivity may be described as an over-the-top (OTT) connection 1350. Host computer 1330 and the connected UEs 1391, 1392 are configured to communicate data and/or signaling via OTT connection 1350, using access network 1311, core network 1314, any intermediate network 1320 and possible further infrastructure (not shown) as intermediaries. OTT connection 1350 may be transparent in the sense that the participating communication devices through which OTT connection 1350 passes are unaware of routing of uplink and downlink communications. For example, base station 1312 may not or need not be informed about the past routing of an incoming downlink communication with data originating from host computer 1330 to be forwarded (e.g., handed over) to a connected UE 1391. Similarly, base station 1312 need not be aware of the future routing of an outgoing uplink communication originating from the UE 1391 towards the host computer 1330.

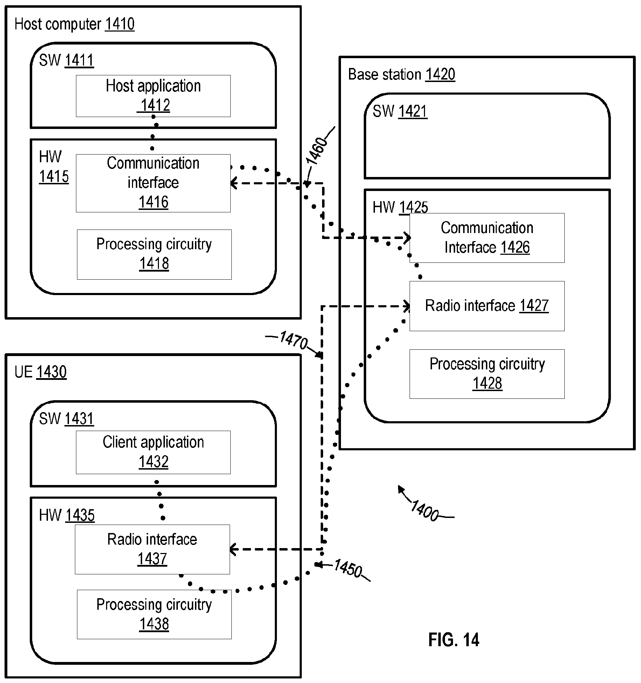

### Figure 14: Host computer communicating via a base station with a user equipment over a partially wireless connection in accordance with some embodiments

Example implementations, in accordance with an embodiment, of the UE, base station, and host computer discussed in the preceding paragraphs will now be described with reference to Figure 14. In communication system 1400, host computer 1410 comprises hardware 1415 including communication interface 1416 configured to set up and maintain a wired or wireless connection with an interface of a different communication device of communication system 1400. Host computer 1410 further comprises processing circuitry 1418, which may have storage and/or processing capabilities. In particular, processing circuitry 1418 may comprise one or more programmable processors, application-specific integrated circuits, field programmable gate arrays, or combinations of these (not shown) adapted to execute instructions. Host computer 1410 further comprises software 1411, which is stored in or accessible by host computer 1410 and executable by processing circuitry 1418. Software 1411 includes host application 1412. Host application 1412 may be operable to provide a service to a remote user, such as UE 1430 connecting via OTT connection 1450 terminating at UE 1430 and host computer 1410. In providing the service to the remote user, host application 1412 may provide user data which is transmitted using OTT connection 1450.

Communication system 1400 further includes base station 1420 provided in a telecommunication system and comprising hardware 1425 enabling it to communicate with host computer 1410 and with UE 1430. Hardware 1425 may include communication interface 1426 for setting up and maintaining a wired or wireless connection with an interface of a different communication device of communication system 1400, as well as radio interface 1427 for setting up and maintaining at least wireless connection 1470 with UE 1430 located in a coverage area (not shown in Figure 14) served by base station 1420. Communication interface 1426 may be configured to facilitate connection 1460 to host computer 1410. Connection 1460 may be direct or it may pass through a core network (not shown in Figure 14) of the telecommunication system and/or through one or more intermediate networks outside the telecommunication system. In the embodiment shown, hardware 1425 of base station 1420 further includes processing circuitry 1428, which may comprise one or more programmable processors, application-specific integrated circuits, field programmable gate arrays, or combinations of these (not shown) adapted to execute instructions. Base station 1420 further has software 1421 stored internally or accessible via an external connection.

Communication system 1400 further includes UE 1430 already referred to. Its hardware 1435 may include radio interface 1437 configured to set up and maintain wireless connection 1470 with a base station serving a coverage area in which UE 1430 is currently located. Hardware 1435 of UE 1430 further includes processing circuitry 1438, which may comprise one or more programmable processors, application-specific integrated circuits, field programmable gate arrays, or combinations of these (not shown) adapted to execute instructions. UE 1430 further comprises software 1431, which is stored in or accessible by UE 1430 and executable by processing circuitry 1438. Software 1431 includes client application 1432. Client application 1432 may be operable to provide a service to a human or non-human user via UE 1430, with the support of host computer 1410. In host computer 1410, an executing host application 1412 may communicate with the executing client application 1432 via OTT connection 1450 terminating at UE 1430 and host computer 1410. In providing the service to the user, client application 1432 may receive request data from host application 1412 and provide user data in response to the request data. OTT connection 1450 may transfer both the request data and the user data. Client application 1432 may interact with the user to generate the user data that it provides.

It is noted that host computer 1410, base station 1420, and UE 1430 illustrated in Figure 14 may be similar or identical to host computer 1330, one of base stations 1312a, 1312b, 1312c, and one of UEs 1391, 1392 of Figure 13, respectively. This is to say, the inner workings of these entities may be as shown in Figure 14 and independently, the surrounding network topology may be that of Figure 13.

In Figure 14, OTT connection 1450 has been drawn abstractly to illustrate the communication between host computer 1410 and UE 1430 via base station 1420, without explicit reference to any intermediary devices and the precise routing of messages via these devices. Network infrastructure may determine the routing, which it may be configured to hide from UE 1430 or from the service provider operating host computer 1410, or both. While OTT connection 1450 is active, the network infrastructure may further take decisions by which it dynamically changes the routing (e.g., on the basis of load balancing consideration or reconfiguration of the network).

Wireless connection 1470 between UE 1430 and base station 1420 is in accordance with the teachings of the embodiments described throughout this disclosure. One or more of the various embodiments improve the performance of OTT services provided to UE 1430 using OTT connection 1450, in which wireless connection 1470 forms the last segment.

More precisely, the teachings of these embodiments may improve the performance of applications between a wireless device and a server using QUIC as the transport protocol. For example, the proxy node may apply one or more enhancement function(s) on the application traffic, so that the application traffic has less traffic congestion. Note that the enhancement provided in embodiments of the disclosure may use the existing network assistance infrastructure and the exposure framework, so that the existing infrastructure can be maintained, and additional parameters/functions are added for embodiments of the disclosure. Note that the proxy node may apply QoS related enhancement functions or charging-related enhancement functions to the application as discussed herein above.

Thus, embodiments of the disclosure make QUIC applications more user friendly (since better QoE may be offered) and make the adaptation of QUIC applications smooth and thereby provide benefits such as higher security (through encryption in QUIC sessions), robust application performance (through proxy-based performance enhancement), and/or flexible service offering (through sponsored data).

A measurement procedure may be provided for the purpose of monitoring data rate, latency, and other factors on which the one or more embodiments improve. There may further be an optional network functionality for reconfiguring OTT connection 1450 between host computer 1410 and UE 1430, in response to variations in the measurement results. The measurement procedure and/or the network functionality for reconfiguring OTT connection 1450 may be implemented in software 1411 and hardware 1415 of host computer 1410 or in software 1431 and hardware 1435 of UE 1430, or both. In embodiments, sensors (not shown) may be deployed in or in association with communication devices through which OTT connection 1450 passes; the sensors may participate in the measurement procedure by supplying values of the monitored quantities exemplified above, or supplying values of other physical quantities from which software 1411, 1431 may compute or estimate the monitored quantities. The reconfiguring of OTT connection 1450 may include message format, retransmission settings, preferred routing, etc.; the reconfiguring need not affect base station 1420, and it may be unknown or imperceptible to base station 1420. Such procedures and functionalities may be known and practiced in the art. In certain embodiments, measurements may involve proprietary UE signaling facilitating host computer 1410's measurements of throughput, propagation times, latency, and the like. The measurements may be implemented in that software 1411 and 1431 causes messages to be transmitted, in particular empty or 'dummy' messages, using OTT connection 1450 while it monitors propagation times, errors, etc.

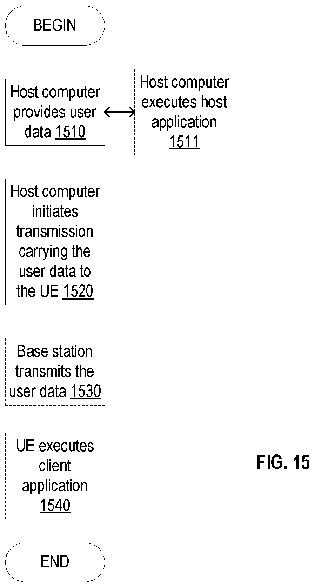

### Figure 15: Methods implemented in a communication system including a host computer, a base station, and a user equipment in accordance with some embodiments

Figure 15 is a flowchart illustrating a method implemented in a communication system, in accordance with one embodiment. The communication system includes a host computer, a base station, and a UE which may be those described with reference to Figures 13 and 14. For simplicity of the present disclosure, only drawing references to Figure 15 will be included in this section. In step 1510, the host computer provides user data. In substep 1511 (which may be optional) of step 1510, the host computer provides the user data by executing a host application. In step 1520, the host computer initiates a transmission carrying the user data to the UE. In step 1530 (which may be optional), the base station transmits to the UE the user data which was carried in the transmission that the host computer initiated, in accordance with the teachings of the embodiments described throughout this disclosure. In step 1540 (which may also be optional), the UE executes a client application associated with the host application executed by the host computer.

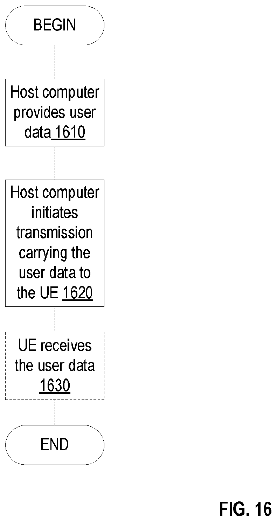

### Figure 16: Methods implemented in a communication system including a host computer, a base station, and a user equipment in accordance with some embodiments

Figure 16 is a flowchart illustrating a method implemented in a communication system, in accordance with one embodiment. The communication system includes a host computer, a base station, and a UE which may be those described with reference to Figures 13 and 14. For simplicity of the present disclosure, only drawing references to Figure 16 will be included in this section. In step 1610 of the method, the host computer provides user data. In an optional substep (not shown), the host computer provides the user data by executing a host application. In step 1620, the host computer initiates a transmission carrying the user data to the UE. The transmission may pass via the base station, in accordance with the teachings of the embodiments described throughout this disclosure. In step 1630 (which may be optional), the UE receives the user data carried in the transmission.

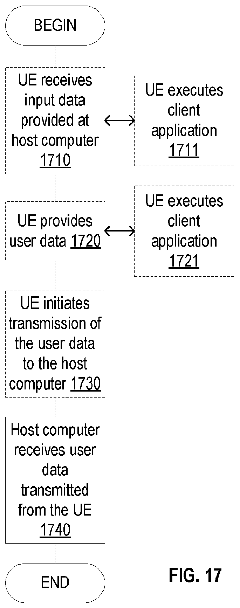

### Figure 17: Methods implemented in a communication system including a host computer, a base station, and a user equipment in accordance with some embodiments

Figure 17 is a flowchart illustrating a method implemented in a communication system, in accordance with one embodiment. The communication system includes a host computer, a base station, and a UE which may be those described with reference to Figures 13 and 14. For simplicity of the present disclosure, only drawing references to Figure 17 will be included in this section. In step 1710 (which may be optional), the UE receives input data provided by the host computer. Additionally or alternatively, in step 1720, the UE provides user data. In substep 1721 (which may be optional) of step 1720, the UE provides the user data by executing a client application. In substep 1711 (which may be optional) of step 1710, the UE executes a client application which provides the user data in reaction to the received input data provided by the host computer. In providing the user data, the executed client application may further consider user input received from the user. Regardless of the specific manner in which the user data was provided, the UE initiates, in substep 1730 (which may be optional), transmission of the user data to the host computer. In step 1740 of the method, the host computer receives the user data transmitted from the UE, in accordance with the teachings of the embodiments described throughout this disclosure.

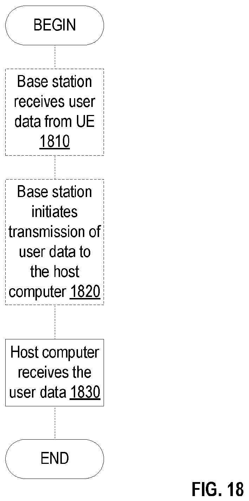

### Figure 18: Methods implemented in a communication system including a host computer, a base station, and a user equipment in accordance with some embodiments

Figure 18 is a flowchart illustrating a method implemented in a communication system, in accordance with one embodiment. The communication system includes a host computer, a base station, and a UE which may be those described with reference to Figures 13 and 14. For simplicity of the present disclosure, only drawing references to Figure 18 will be included in this section. In step 1810 (which may be optional), in accordance with the teachings of the embodiments described throughout this disclosure, the base station receives user data from the UE. In step 1820 (which may be optional), the base station initiates transmission of the received user data to the host computer. In step 1830 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

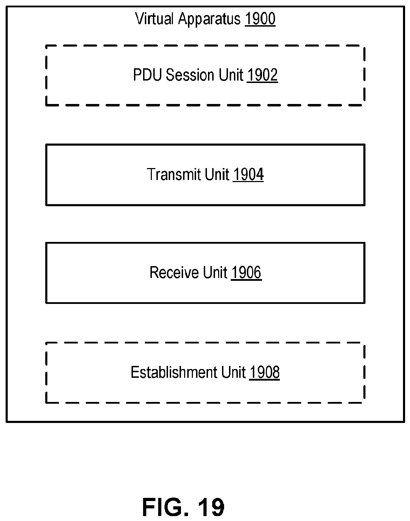

### Figure 19: Virtualization apparatus in accordance with some embodiments

**Figure 19** illustrates a schematic block diagram of an apparatus 1900 in a wireless network (for example, the wireless network shown in Figure 10). The apparatus may be implemented in a wireless device or network node (e.g., wireless device 1010 or network node 1060 shown in Figure 10). Apparatus 1900 is operable to carry out the example method described with reference to Figures 4-8 and possibly any other processes or methods disclosed herein. It is also to be understood that the method of Figures 4-8 is not necessarily carried out solely by apparatus 1900. At least some operations of the method can be performed by one or more other entities.

Virtual Apparatus 1900 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

In some implementations, the processing circuitry may be used to cause a PDU session unit 1902 to perform the operations discussed herein above relating to references 702, a transmit unit 1904 that performs the operation discussed herein above relating to 706, a receive unit 1906 that performs the operation discussed herein above relating to 704, and any other suitable units of apparatus 1900 to perform corresponding functions according one or more embodiments of the present disclosure.

In other implementations, the processing circuitry may be used to cause a PDU session unit 1902 to perform the operations discussed herein above relating to references 802, a transmit unit 1904 that performs the operation discussed herein above relating to 804, a receive unit 1906 that performs the operation discussed herein above relating to 806, an establishment unit 1908 that performs the operation discussed herein above relating to 808, and any other suitable units of apparatus 1900 to perform corresponding functions according one or more embodiments of the present disclosure.

The term unit may have conventional meaning in the field of electronics, electrical devices, and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## Claims

1. A method implemented in a network node (902) for traffic enhancement to apply to an application between a wireless device and a server, wherein the application is to be delivered using a Quick User Datagram Protocol Internet Connection, QUIC, session, the method being **characterised in** comprising:
receiving (704) from the wireless device, a request to activate a policy for the application between the wireless device and the server, wherein the request includes an identifier of the application, and an indication to request an enhancement function; and
in response to the request to activate the policy for the application, transmitting (706) to the wireless device, an authorization of traffic enhancement with information of a proxy node to provide the enhancement function upon the network node identifying the proxy node.

2. The method of claim 1, wherein the authorization of traffic enhancement is transmitted with a lifetime indicating a period during which the enhancement function is available to use.

3. The method of claim 1 or 2, wherein the information of the proxy node to provide the enhancement function includes one or more of the following: a global identifier or a common name of the proxy node, a certificate of the proxy node, an Internet Protocol, IP, address and/or port of the proxy node, and an indication of one or more functions that are provided by the proxy node.

4. The method of claim 1 or 2, wherein the network node performs a network assistance application function, NAAF, and the identification of the proxy node comprises:
transmitting a policy activation request message to a policy control function, PCF, upon receiving the request to activate the policy, wherein the policy activation request message includes the application identifier and the indication to request the enhancement function; and
receiving a policy activation response message from the PCF, wherein the policy activation response message includes the information of the proxy node to provide the enhancement function.

5. The method of claim 4, wherein upon receiving the policy activation request message from the NA AF, the PCF is to perform:
updating or creating one or more policy and charging control rules;
transmitting a policy control modify request message to a session management function, SMF;
receiving a policy control modify response message from the SMF, wherein the policy control modify response message includes the information of the proxy node to provide the enhancement function; and
transmitting the policy activation response message to the NA AF.

6. The method of claim 5, wherein upon receiving the policy control modify request message, the SMF is to perform:
transmitting a packet flow control protocol session modification request message to a user plane function, UPF;
receiving a packet flow control protocol session modification response message from the UPF, wherein the packet flow control protocol session modification response includes the information of the proxy node to provide the enhancement function; and
transmitting the policy control modify response message to the PCF.

7. The method of claim 6, wherein upon receiving the packet flow control protocol session modification request message, the UPF is to perform:
selecting a proxy node to perform the enhancement function; and
transmitting the packet flow control protocol session modification response message to the SMF.

8. The method of claim 1 or 2, wherein:
the network node establishes (702) a protocol data unit, PDU, session with the wireless device prior to receiving the request to activate the policy; and/or
the proxy node notifies a network resource function, NRF, a list of enhancement functions the proxy node performs.

9. A network node (902) for applying traffic enhancement to an application between a wireless device and a server, wherein the application is to be delivered using a Quick User Datagram Protocol Internet Connection, QUIC, session, the network node being **characterised in** comprising:
a processor (942) and non-transitory machine-readable storage medium (949) having stored instructions, which when executed by the processor, is capable of causing the network node to perform:
receiving (704) from the wireless device, a request to activate a policy for the application between the wireless device and the server, wherein the request includes an identifier of the application, and an indication to request an enhancement function; and
in response to the request to activate the policy for the application, transmitting (706) to the wireless device, an authorization of traffic enhancement with information of a proxy node to provide the enhancement function upon the network node identifying the proxy node.

10. The network node of claim 9, wherein the authorization of traffic enhancement is transmitted with a lifetime indicating a period during which the enhancement function is available to use.

11. The network node of claim 9 or 10, wherein the information of the proxy node to provide the enhancement function includes one or more of the following: a global identifier or a common name of the proxy node, a certificate of the proxy node, an Internet Protocol, IP, address and/or port of the proxy node, and an indication of one or more functions that are provided by the proxy node.

12. The network node of claim 9 or 10, wherein the instructions, when executed by the processor, is capable of causing the network node to further perform a network assistance application function, NAAF, and the identification of the proxy node comprises:
transmitting a policy activation request message to a policy control function, PCF, upon receiving the request to activate the policy, wherein the policy activation request message includes the application identifier and the indication to request the enhancement function; and
receiving a policy activation response message from the PCF, wherein the policy activation response message includes the information of the proxy node to provide the enhancement function.

13. The network node of claim 9 or 10, wherein the instructions, when executed by the processor, is capable of causing the network node further to establish (702) a protocol data unit (PDU) session with the wireless device prior to receiving the request to activate the policy.

14. A non-transitory machine-readable storage medium (949) having stored instructions for traffic enhancement to apply to an application between a wireless device and a server, wherein the application is to be delivered using a Quick User Datagram Protocol Internet Connection, QUIC, session, and wherein the instructions when executed by the processor of a network node (902), are capable of causing the network node to perform the method of any one of claims 1, 2 or 3.

15. The non-transitory machine-readable storage medium of claim 14, wherein the instructions, when executed by the processor, is capable of causing the network node to further perform the method of claim 4 or 8.

## Patentansprüche

1. Verfahren, das in einem Netzwerkknoten (902) implementiert wird, zur Anwendung von Verkehrserweiterung auf eine Anwendung zwischen einer drahtlosen Vorrichtung und einem Server, wobei die Anwendung unter Verwendung einer Quick-User-Datagram-Protocol-Internet-Connection-,QUIC-,Sitzung zuzustellen ist, wobei das Verfahren **dadurch gekennzeichnet ist, dass** es umfasst:
Empfangen (704) einer Anforderung zum Aktivieren einer Richtlinie für die Anwendung zwischen der drahtlosen Vorrichtung und dem Server von der drahtlosen Vorrichtung, wobei die Anforderung eine Kennung der Anwendung und eine Anzeige zum Anfordern einer Erweiterungsfunktion umfasst; und
Senden (706) einer Autorisierung der Verkehrserweiterung mit Informationen eines Proxy-Knotens zum Bereitstellen der Erweiterungsfunktion bei Identifizierung des Proxy-Knotens durch den Netzwerkknoten in Reaktion auf die Anforderung zum Aktivieren der Richtlinie für die Anwendung.

2. Verfahren nach Anspruch 1, wobei die Autorisierung der Verkehrserweiterung mit einer Lebensdauer gesendet wird, die einen Zeitraum anzeigt, während dessen die Erweiterungsfunktion zur Verwendung verfügbar ist.

3. Verfahren nach Anspruch 1 oder 2, wobei die Informationen des Proxy-Knotens zum Bereitstellen der Erweiterungsfunktion eines oder mehrere von Folgenden umfassen: eine globale Kennung oder einen allgemeinen Namen des Proxy-Knotens, ein Zertifikat des Proxy-Knotens, eine Internetprotokoll-,IP-,Adresse und/oder einen IP-Port des Proxy-Knotens und eine Anzeige einer oder mehrerer Funktionen, die durch den Proxy-Knoten bereitgestellt werden.

4. Verfahren nach Anspruch 1 oder 2, wobei der Netzwerkknoten eine Netzwerkunterstützungsanwendungsfunktion, NAAF, ausführt und die Identifizierung des Proxy-Knotens umfasst:
Senden einer Richtlinienaktivierungsanforderungsnachricht an eine Richtliniensteuerungsfunktion, PCF, bei Empfang der Anforderung zum Aktivieren der Richtlinie, wobei die Richtlinienaktivierungsanforderungsnachricht die Anwendungskennung und die Anzeige zum Anfordern der Erweiterungsfunktion umfasst; und
Empfangen einer Richtlinienaktivierungsantwortnachricht von der PCF, wobei die Richtlinienaktivierungsantwortnachricht die Informationen des Proxy-Knotens zum Bereitstellen der Erweiterungsfunktion umfasst.

5. Verfahren nach Anspruch 4, wobei die PCF bei Empfang der Richtlinienaktivierungsanforderungsnachricht von der NAAF Folgendes durchführt:
Aktualisieren oder Erstellen einer oder mehrerer Richtlinien und Abrechnungssteuerungsregeln;
Senden einer Richtliniensteuerung-modifizieren-Anforderungsnachricht an eine Sitzungsverwaltungsfunktion, SMF;
Empfangen einer Richtliniensteuerung-modifizieren-Antwortnachricht von der SMF, wobei die Richtliniensteuerung-modifizieren-Antwortnachricht die Informationen des Proxy-Knotens zum Bereitstellen der Erweiterungsfunktion umfasst; und
Senden der Richtlinienaktivierungsantwortnachricht an die NAAF.

6. Verfahren nach Anspruch 5, wobei die SMF bei Empfang der Richtliniensteuerung-modifizieren-Anforderungsnachricht Folgendes durchführt:
Senden einer Nachricht zur Anforderung einer Modifikation einer Paketflusssteuerprotokollsitzung an eine Benutzerebenen-Funktion, UPF;
Empfangen einer Antwortnachricht bezüglich der Modifikation der Paketflusssteuerprotokollsitzung von der UPF, wobei die Antwortnachricht bezüglich der Modifikation der Paketflusssteuerprotokollsitzung die Informationen des Proxy-Knotens zum Bereitstellen der Erweiterungsfunktion umfasst; und
Senden der Richtliniensteuerung-modifizieren-Antwortnachricht an die PCF.

7. Verfahren nach Anspruch 6, wobei die UPF bei Empfang der Nachricht zur Anforderung der Modifikation der Paketflusssteuerprotokollsitzung Folgendes durchführt:
Auswählen eines Proxy-Knotens zum Ausführen der Erweiterungsfunktion; und
Senden einer Antwortnachricht bezüglich der Modifikation der Paketflusssteuerprotokollsitzung an die SMF.

8. Verfahren nach Anspruch 1 oder 2, wobei:
der Netzwerkknoten vor dem Empfang der Anforderung zum Aktivieren der Richtlinie eine Protokolldateneinheits-,PDU-,Sitzung mit der drahtlosen Vorrichtung aufbaut (702); und/oder
der Proxy-Knoten einer Netzwerkressourcenfunktion, NFR, eine Liste von Erweiterungsfunktionen meldet, die der Proxy-Knoten ausführt.

9. Netzwerkknoten (902) zum Anwenden von Verkehrserweiterung auf eine Anwendung zwischen einer drahtlosen Vorrichtung und einem Server, wobei die Anwendung unter Verwendung einer Quick-User-Datagram-Protocol-Internet-Connection-,QUIC-,Sitzung zuzustellen ist, wobei der Netzwerkknoten **dadurch gekennzeichnet ist, dass** er umfasst:
einen Prozessor (942) und ein nicht-transitorisches maschinenlesbares Speichermedium (949), das Anweisungen enthält, die bei Ausführung durch den Prozessor den Netzwerkknoten zum Durchführen von Folgendem veranlassen können:
Empfangen (704) einer Anforderung zum Aktivieren einer Richtlinie für die Anwendung zwischen der drahtlosen Vorrichtung und dem Server von der drahtlosen Vorrichtung, wobei die Anforderung eine Kennung der Anwendung und eine Anzeige zum Anfordern einer Erweiterungsfunktion umfasst; und
Senden (706) einer Autorisierung der Verkehrserweiterung mit Informationen eines Proxy-Knotens zum Bereitstellen der Erweiterungsfunktion bei Identifizierung des Proxy-Knotens durch den Netzwerkknoten in Reaktion auf die Anforderung zum Aktivieren der Richtlinie für die Anwendung.

10. Netzwerkknoten nach Anspruch 9, wobei die Autorisierung der Verkehrserweiterung mit einer Lebensdauer gesendet wird, die einen Zeitraum anzeigt, während dessen die Erweiterungsfunktion zur Verwendung verfügbar ist.

11. Netzwerkknoten nach Anspruch 9 oder 10, wobei die Informationen des Proxy-Knotens zum Bereitstellen der Erweiterungsfunktion eines oder mehrere von Folgenden umfassen: eine globale Kennung oder einen allgemeinen Namen des Proxy-Knotens, ein Zertifikat des Proxy-Knotens, eine Internetprotokoll-,IP-,Adresse und/oder -Port des Proxy-Knotens und eine Anzeige einer oder mehrerer Funktionen, die durch den Proxy-Knoten bereitgestellt werden.

12. Netzwerkknoten nach Anspruch 9 oder 10, wobei die Anweisungen bei Ausführung durch den Prozessor den Netzwerkknoten ferner zum Ausführen einer Netzwerkunterstützungsanwendungsfunktion, NAAF, veranlassen können und die Identifizierung des Proxy-Knotens umfasst:
Senden einer Richtlinienaktivierungsanforderungsnachricht an eine Richtliniensteuerungsfunktion, PCF, bei Empfang der Anforderung zum Aktivieren der Richtlinie, wobei die Richtlinienaktivierungsanforderungsnachricht die Anwendungskennung und die Anzeige zum Anfordern der Erweiterungsfunktion umfasst; und
Empfangen einer Richtlinienaktivierungsantwortnachricht von der PCF, wobei die Richtlinienaktivierungsantwortnachricht die Informationen des Proxy-Knotens zum Bereitstellen der Erweiterungsfunktion umfasst.

13. Netzwerkknoten nach Anspruch 9 oder 10, wobei die Anweisungen bei Ausführung durch den Prozessor den Netzwerkknoten ferner zum Aufbauen (702) einer Protokolldateneinheits-(PDU-)Sitzung mit der drahtlosen Vorrichtung vor dem Empfang der Anforderung zum Aktivieren der Richtlinie veranlassen können.

14. Nicht-transitorisches maschinenlesbares Speichermedium (949) mit gespeicherten Anweisungen zum Anwenden von Verkehrserweiterung auf eine Anwendung zwischen einer drahtlosen Vorrichtung und einem Server, wobei die Anwendung unter Verwendung einer Quick-User-Datagram-Protocol-Internet-Connection-,QUIC-,Sitzung
zuzustellen ist, und wobei die Anweisungen bei Ausführung durch den Prozessor eines Netzwerkknotens (902) den Netzwerkknoten zum Durchführen des Verfahrens nach einem der Ansprüche 1, 2 oder 3 veranlassen können.

15. Nicht-transitorisches maschinenlesbares Speichermedium nach Anspruch 14, wobei die Anweisungen bei Ausführung durch den Prozessor den Netzwerkknoten ferner zum Durchführen des Verfahrens nach Anspruch 4 oder 8 veranlassen können.

## Revendications

1. Procédé mis en oeuvre dans un noeud de réseau (902) pour une amélioration de trafic à appliquer à une application entre un dispositif sans fil et un serveur, dans lequel l'application doit être mise à disposition en utilisant une session de connexion Internet de protocole de datagramme utilisateur rapide, QUIC, le procédé étant **caractérisé en ce qu'**il comprend :
la réception (704), depuis le dispositif sans fil, d'une demande pour activer une politique pour l'application entre le dispositif sans fil et le serveur, dans lequel la demande inclut un identifiant de l'application et une indication de demander une fonction d'amélioration ; et
en réponse à la demande pour activer la politique pour l'application, la transmission (706), au dispositif sans fil, d'une autorisation d'amélioration de trafic avec des informations d'un noeud proxy pour fournir la fonction d'amélioration à l'identification du noeud proxy par le noeud de réseau.

2. Procédé selon la revendication 1, dans lequel l'autorisation d'amélioration de trafic est transmise avec une durée de vie indiquant une période au cours de laquelle la fonction d'amélioration est disponible pour son utilisation.

3. Procédé selon la revendication 1 ou 2, dans lequel les informations du noeud proxy pour fournir la fonction d'amélioration incluent un ou plusieurs parmi ce qui suit : un identifiant mondial ou un nom commun du noeud proxy, un certificat du noeud proxy, une adresse de protocole Internet, IP, et/ou un port du noeud proxy, et une indication d'une ou plusieurs fonctions qui sont fournies par le noeud proxy.

4. Procédé selon la revendication 1 ou 2, dans lequel le noeud de réseau réalise une fonction d'application d'assistance de réseau, NAAF, et l'identification du noeud proxy comprend :
la transmission d'un message de demande d'activation de politique à une fonction de commande de politique, PCF, à la réception de la demande pour activer la politique, dans lequel le message de demande d'activation de politique inclut l'identifiant d'application et l'indication de demander la fonction d'amélioration ; et
la réception d'un message de réponse d'activation de politique depuis la PCF, dans lequel le message de réponse d'activation de politique inclut les informations du noeud proxy pour fournir la fonction d'amélioration.

5. Procédé selon la revendication 4, dans lequel, à la réception du message de demande d'activation de politique depuis la NAAF, la PCF doit réaliser :
la mise à jour ou la création d'une ou plusieurs règles de commande de facturation et de politique ;
la transmission d'un message de demande de modification de commande de politique à une fonction de gestion de session, SMF ;
la réception d'un message de réponse de modification de commande de politique depuis la SMF, dans lequel le message de réponse de modification de commande de politique inclut les informations du noeud proxy pour fournir la fonction d'amélioration ; et
la transmission du message de réponse d'activation de politique à la NAAF.

6. Procédé selon la revendication 5, dans lequel, à la réception du message de demande de modification de commande de politique, la SMF doit réaliser :
la transmission d'un message de demande de modification de session de protocole de commande de flux de paquets à une fonction de plan d'utilisateur, UPF ;
la réception d'un message de réponse de modification de session de protocole de commande de flux de paquets depuis l'UPF, dans lequel la réponse de modification de session de protocole de commande de flux de paquets inclut les informations du noeud proxy pour fournir la fonction d'amélioration ; et
la transmission du message de réponse de modification de commande de politique à la PCF.

7. Procédé selon la revendication 6, dans lequel, à la réception du message de demande de modification de session de protocole de commande de flux de paquets, l'UPF doit réaliser :
la sélection d'un noeud proxy pour réaliser la fonction d'amélioration ; et
la transmission du message de réponse de modification de session de protocole de commande de flux de paquets à la SMF.

8. Procédé selon la revendication 1 ou 2, dans lequel :
le noeud de réseau établit (702) une session d'unité de données de protocole, PDU, avec le dispositif sans fil avant la réception de la demande pour activer la politique ; et/ou
le noeud proxy notifie, à une fonction de ressources de réseau, NRF, une liste de fonctions d'amélioration que le noeud proxy réalise.

9. Noeud de réseau (902) pour appliquer une amélioration de trafic à une application entre un dispositif sans fil et un serveur, dans lequel l'application doit être mise à disposition en utilisant une session de connexion Internet de protocole de datagramme utilisateur rapide, QUIC, le noeud de réseau étant **caractérisé en ce qu'**il comprend :
un processeur (942) et un support de stockage non transitoire lisible par machine (949) sur lequel sont stockées des instructions qui, lorsqu'elles sont exécutées par le processeur, sont capables d'amener le noeud de réseau à réaliser :
la réception (704), depuis le dispositif sans fil, d'une demande pour activer une politique pour l'application entre le dispositif sans fil et le serveur, dans lequel la demande inclut un identifiant de l'application et une indication de demander une fonction d'amélioration ; et
en réponse à la demande pour activer la politique pour l'application, la transmission (706), au dispositif sans fil, d'une autorisation d'amélioration de trafic avec des informations d'un noeud proxy pour fournir la fonction d'amélioration à l'identification du noeud proxy par le noeud de réseau.

10. Noeud de réseau selon la revendication 9, dans lequel l'autorisation d'amélioration de trafic est transmise avec une durée de vie indiquant une période au cours de laquelle la fonction d'amélioration est disponible pour son utilisation.

11. Noeud de réseau selon la revendication 9 ou 10, dans lequel les informations du noeud proxy pour fournir la fonction d'amélioration incluent un ou plusieurs parmi ce qui suit : un identifiant mondial ou un nom commun du noeud proxy, un certificat du noeud proxy, une adresse de protocole Internet, IP, et/ou un port du noeud proxy, et une indication d'une ou plusieurs fonctions qui sont fournies par le noeud proxy.

12. Noeud de réseau selon la revendication 9 ou 10, dans lequel les instructions, lorsqu'elles sont exécutées par le processeur, sont capables d'amener le noeud de réseau à réaliser en outre une fonction d'application d'assistance de réseau, NAAF, et l'identification du noeud proxy comprend :
la transmission d'un message de demande d'activation de politique à une fonction de commande de politique, PCF, à la réception de la demande pour activer la politique, dans lequel le message de demande d'activation de politique inclut l'identifiant d'application et l'indication de demander la fonction d'amélioration ; et
la réception d'un message de réponse d'activation de politique depuis la PCF, dans lequel le message de réponse d'activation de politique inclut les informations du noeud proxy pour fournir la fonction d'amélioration.

13. Noeud de réseau selon la revendication 9 ou 10, dans lequel les instructions, lorsqu'elles sont exécutées par le processeur, sont capables d'amener le noeud de réseau en outre à établir (702) une session d'unité de données de protocole (PDU) avec le dispositif sans fil avant la réception de la demande pour activer la politique.

14. Support de stockage non transitoire lisible par machine (949) sur lequel sont stockées des instructions pour une amélioration de trafic à appliquer à une application entre un dispositif sans fil et un serveur, dans lequel l'application doit être mise à disposition en utilisant une session de connexion Internet de protocole de datagramme utilisateur rapide, QUIC, et dans lequel les instructions, lorsqu'elles sont exécutées par le processeur d'un noeud de réseau (902), sont capables d'amener le noeud de réseau à réaliser le procédé selon l'une quelconque des revendications 1, 2 ou 3.

15. Support de stockage non transitoire lisible par machine selon la revendication 14, dans lequel les instructions, lorsqu'elles sont exécutées par le processeur, sont capables d'amener le noeud de réseau à réaliser en outre le procédé selon la revendication 4 ou 8.
